# EUROPEAN PATENT APPLICATION

(11) **EP 4 607 938 A1**
(43) Date of publication of application: **27.08.2025**
(21) Application number: 24813845.5
(22) Date of filing: 22.03.2024
(51) Int. Cl.: H04N 23/63

(54) **IMAGE PROCESSING METHOD AND ELECTRONIC DEVICE**

(30) Priority: 26.05.2023 CN 202310613144; 26.05.2023 CN 202310610328
(71) Applicant: Honor Device Co., Ltd., Shenzhen, Guangdong 518040 (CN)
(72) Inventor: CHAI, Wensong, Shenzhen, Guangdong 518040 (CN)
(74) Representative: Isarpatent
(86) International application number: PCT/CN2024/083161
(87) International publication number: WO 2024/244639

(57) **Abstract**

This application provides an image processing method and an electronic device. The electronic device may display a first editing interface, where the first editing interface includes a thumbnail corresponding to a still image in a first dynamic image; display the still image corresponding to the thumbnail in response to a user operation of selecting the thumbnail, and display the thumbnail as a selected state; and edit the still image in response to a user operation of editing the still image, and further display an effect obtained after the still image is edited. Alternatively, the electronic device may display a first editing interface, where the first editing interface includes a thumbnail corresponding to a still image in a first dynamic image; display the still image corresponding to the thumbnail in response to a user operation of selecting the thumbnail, and display the thumbnail as a selected state; and save the still image in response to a user operation of saving the still image. In this method, any frame of still image in the dynamic image can be edited or saved.

## Description

This application claims priority to Chinese Patent Application No. 202310613144.3, filed with the China National Intellectual Property Administration on May 26, 2023 and entitled "IMAGE PROCESSING METHOD AND ELECTRONIC DEVICE", and claims priority to Chinese Patent Application No. 202310610328.4, filed with the China National Intellectual Property Administration on May 26, 2023 and entitled "IMAGE PROCESSING METHOD AND ELECTRONIC DEVICE", which are incorporated herein by reference in their entireties.

### TECHNICAL FIELD

This application relates to the field of electronic technologies, and in particular, to an image processing method and an electronic device.

### BACKGROUND

Currently, many electronic devices have a function of shooting a dynamic image. The dynamic image may generate a dynamic effect in a playback process, so that a user can feel excellent visual effects.

In some application scenarios, the user expects to further edit the dynamic image, to obtain a still image that satisfies a personalized requirement of the user. However, to edit the dynamic image conveniently and efficiently is a problem that urgently needs to be resolved in the industry at present.

### SUMMARY

This application provides an image processing method and an electronic device, so that each frame of still image in a dynamic image can be edited conveniently and efficiently.

According to a first aspect, this application provides an image processing method, applied to an electronic device, where the method includes:
displaying a first interface, where the first interface includes a first still image and a first control, the first still image corresponds to a first dynamic image, and the first dynamic image includes a plurality of frames of still images;
displaying a first editing interface in response to a user operation performed on the first control, where the first editing interface includes a first thumbnail, a second thumbnail, and a second still image, the first thumbnail and the second thumbnail are thumbnails corresponding to two frames of still images in the first dynamic image, the first thumbnail is in a selected state, the first thumbnail corresponds to the second still image, the first still image and the second still image correspond to a same frame of still image in the first dynamic image, and the first editing interface further includes a second control;
displaying a third still image corresponding to the second thumbnail at a position of the second still image in response to a user operation performed on the second thumbnail, where the second thumbnail is in a selected state;
displaying a second editing interface in response to a user operation performed on the second control, where the second editing interface includes a fourth still image and a third control, and the third still image and the fourth still image correspond to a same frame of still image in the first dynamic image;
displaying an editing effect of the fourth still image in response to a user operation performed on the fourth still image; and
displaying the first editing interface in response to a user operation performed on the third control, where the first editing interface displays the editing effect of the fourth still image at a position of the third still image, and displays the editing effect of the fourth still image at a position of the second thumbnail.

In this embodiment of this application, after the user selects any still image in the dynamic image and determines the second control (for example, the graffiti control), the electronic device may display the second editing interface for editing by the user, and further display an effect obtained after the still image is edited. In this method, the user does not need to perform an additional operation of first setting the selected image to a cover, and user operation is little, so that user experience can be improved.

The editing effect of the fourth still image may be display content obtained after the editing effect is superposed to the fourth still image, for example, may be display content obtained after a graffiti trace or a filter is superposed to the fourth still image, or, for another example, may be display content obtained after partial content is cropped from the fourth still image.

With reference to the first aspect, in some embodiments, the first editing interface includes a first save control, and the method further includes: generating a target image based on the editing effect of the fourth still image in response to a user operation performed on the first save control; and saving the target image.

In this embodiment of this application, based on the first save control in the first editing interface, the user may use the editing effect of the fourth still image as a still image for saving. This method can satisfy a requirement of the user of wanting to save an edited still image.

With reference to the first aspect, in some embodiments, the method further includes: displaying a first prompt box on the first editing interface in response to the user operation performed on the first save control, where the first prompt box indicates that an image is being saved; displaying a second prompt box on the first editing interface after the target image is saved, where the second prompt box indicates that the image has been successfully saved; and canceling displaying the second prompt box.

In this embodiment of this application, the electronic device may display the prompt box respectively in a process of saving the target image and after saving the target image, and further cancel displaying the prompt box, and still display the current interface, that is, the first editing interface. Further, the electronic device may reset the first editing interface, and may further reselect a still image in the dynamic image for editing. This method can satisfy a requirement of the user of wanting to edit a plurality of frames of still images in the dynamic image, so that a complex operation that the user needs to manually enter the current interface again after jumping out of the current interface can be avoided, so that user experience can be effectively improved.

With reference to the first aspect, in some embodiments, the second editing interface further includes a second save control, and the method further includes: generating the target image based on the editing effect of the fourth still image when a user operation performed on the second save control is received; saving the target image; and displaying a second interface after the target image is saved, where the second interface includes the target image.

In this embodiment of this application, the electronic device may jump out of the current interface, that is, the first editing interface after saving the target image, and further display the second interface including the target image. This method can satisfy a requirement of the user of wanting to view the target image.

Optionally, the second interface may further include processing controls such as an editing control and a sharing control. Further, the electronic device may process the target image in response to a user operation performed on the processing controls, for example, share the target image in response to a user operation performed on the sharing control. The method can satisfy a requirement of the user of performing further operation on the target image, and can reduce user operation that the user enters the second interface from the gallery application after exiting from the first editing interface, so that user experience can be effectively improved.

With reference to the first aspect, in some embodiments, the generating the target image includes: determining, based on the second thumbnail, position information of the fourth still image in a video corresponding to the first dynamic image; obtaining a first image from the video based on the position information; increasing a resolution of the first image, to obtain a second image; and processing the second image based on the editing effect of the fourth still image, to obtain the target image.

In this embodiment of this application, the electronic device may obtain the fourth still image with a high resolution, and edit the fourth still image with the high resolution to achieve an editing effect the same as that of the fourth still image. However, a resolution of the target image may be greater than the resolution of the editing effect of the fourth still image displayed on a screen. This method can save an image with a high resolution, so that the user can view an image with a higher resolution when subsequently viewing the image or processing the image, thereby improving user experience.

With reference to the first aspect, in some embodiments, the displaying a second editing interface includes: taking a screenshot of a position area in which the third still image is displayed, to obtain the fourth still image.

In this embodiment of this application, when the first editing interface jumps to the second editing interface, the electronic device may take a screenshot of a position area in which the third still image is displayed, to obtain the fourth still image. Because a screenshot taking speed is higher than a speed of re-obtaining the third still image, the method can quickly display the second editing interface, so that a time for the user to wait for interface display can be reduced, thereby improving user experience.

With reference to the first aspect, in some embodiments, the first editing interface includes a resetting control, and the method further includes: displaying the first editing interface in response to a user operation performed on the resetting control, where the first editing interface includes the first thumbnail, the second thumbnail, and the second still image, and the first thumbnail is in the selected state.

In this embodiment of this application, the electronic device may reset the first editing interface, and may further reselect a still image in the dynamic image for editing. This method can satisfy a requirement of the user of wanting to edit a plurality of frames of still images in the dynamic image, so that a complex operation that the user needs to manually enter the current interface again after jumping out of the current interface can be avoided, so that user experience can be effectively improved. With reference to the first aspect, in some embodiments, the first still image is a cover image of the first dynamic image.

With reference to the first aspect, in some embodiments, saving the target image by the electronic device includes:
obtaining a storage path that corresponds to the first dynamic image, an initial exchangeable image file Exif, and initial database information, where the initial Exif includes a parameter of the first dynamic image, and the parameter includes a time;
obtaining, by the electronic device based on the storage path corresponding to the first dynamic image and a current time, a storage path corresponding to the target image;
creating a target file corresponding to the target image based on the storage path corresponding to the target image;
modifying the time in the initial Exif as the current time, to obtain target Exif;
writing the target Exif and the target image into the target file;
updating the initial database information with file information of the target image, to obtain target database information, where the file information of the target image includes the storage path corresponding to the target image and a creation time of the target file; and
storing the target database information into a database.

In this embodiment of this application, the electronic device may generate data of the target image based on data of the first dynamic image. This method modifies the data of the first dynamic image, and the speed is higher than a speed of regenerating the data of the target image, so that a speed of saving the target image can be increased.

With reference to the first aspect, in some embodiments, the displaying a first editing interface includes: obtaining the video corresponding to the first dynamic image; and decoding the video by using an encoding and decoding module, to obtain the plurality of frames of still images.

With reference to the first aspect, in some embodiments, the second control is any one of a cropping control, a graffiti control, a watermark control, a filter control, a text control, a mosaic control, a blurring control, a photo frame control, and a color retention control.

In this embodiment of this application, a specific function of the second control is not limited. The electronic device may perform any editing operation on any frame of image in the first dynamic image. The method can satisfy a personal requirement of the user, to effectively improve user experience.

According to a second aspect, this application provides an image processing method, applied to an electronic device, where the method includes:
displaying a first interface, where the first interface includes a first still image and a first control, the first still image corresponds to a first dynamic image, and the first dynamic image includes a plurality of frames of still images;
displaying a first editing interface in response to a user operation performed on the first control, where the first editing interface includes a first thumbnail, a second thumbnail, and a second still image, the first thumbnail and the second thumbnail are thumbnails corresponding to two frames of still images in the first dynamic image, the first thumbnail is in a selected state, the first thumbnail corresponds to the second still image, the first still image and the second still image correspond to a same frame of still image in the first dynamic image, and the first editing interface further includes a second control;
displaying a third still image corresponding to the second thumbnail at a position of the second still image in response to a user operation performed on the second thumbnail, where the second thumbnail is in a selected state; and
saving the third still image in response to a user operation performed on the second control.

In this embodiment of this application, after the user selects any still image in the dynamic image, the electronic device may save any still image in response to the user operation. In this method, the user does not need to perform an additional operation of first setting the selected image to a cover, and user operation is little, so that user experience can be improved.

With reference to the second aspect, in some embodiments, the method further includes:
displaying a first prompt box on the first editing interface in response to the user operation performed on the second control, where the first prompt box indicates that an image is being saved;
displaying a second prompt box on the first editing interface after the third still image is saved, where the second prompt box indicates that the image has been successfully saved; and
canceling displaying the second prompt box.

In this embodiment of this application, the electronic device may display the prompt box respectively in a process of saving the third still image and after saving the third still image, and further cancel displaying the prompt box, and still display the current interface, that is, the first editing interface. Further, the electronic device may reselect a still image in the dynamic image for saving, editing, or other operations. This method can satisfy a requirement of the user of wanting to edit a plurality of frames of still images in the dynamic image, so that a complex operation that the user needs to manually enter the current interface again after jumping out of the current interface can be avoided, so that user experience can be effectively improved.

With reference to the second aspect, in some embodiments, the method further includes:
displaying a second interface after the third still image is saved, where the second interface includes the third still image.

With reference to the second aspect, in some embodiments, the saving the third still image includes:
determining, based on the second thumbnail, position information of the third still image in a video corresponding to the first dynamic image;
obtaining a first image from the video based on the position information;
increasing a resolution of the first image, to obtain a second image; and
saving the second image.

In this embodiment of this application, the electronic device may save the third still image with a high resolution, and the resolution of the saved third still image may be greater than that of the third still image displayed on the current interface. This method can save an image with a high resolution, so that the user can view an image with a higher resolution when subsequently viewing the image or processing the image, thereby improving user experience.

With reference to the second aspect, in some embodiments, the first editing interface further includes a third control, and the method further includes:
displaying a second editing interface in response to a user operation performed on the third control, where the second editing interface includes a fourth still image and a fourth control, and the third still image and the fourth still image correspond to a same frame of still image in the first dynamic image;
displaying an editing effect of the fourth still image in response to a user operation performed on the fourth still image; and
displaying the first editing interface in response to a user operation performed on the fourth control, where the first editing interface displays an editing effect of the fourth still image at a position of the third still image, and displays the editing effect of the fourth still image at a position of the second thumbnail.

In this embodiment of this application, after the user selects any still image in the dynamic image and determines the second control (for example, the graffiti control), the electronic device may display the second editing interface for editing by the user, and further display an effect obtained after the still image is edited. In this method, the user does not need to perform an additional operation of first setting the selected image to a cover, and user operation is little, so that user experience can be improved.

The editing effect of the fourth still image may be display content obtained after the editing effect is superposed to the fourth still image, for example, may be display content obtained after a graffiti trace or a filter is superposed to the fourth still image, or, for another example, may be display content obtained after partial content is cropped from the fourth still image.

With reference to the second aspect, in some embodiments, the second editing interface further includes a fifth control, and the method further includes:
generating a target image based on the editing effect of the fourth still image when a user operation performed on the fifth control is received;
saving the target image; and
displaying a third interface after the target image is saved, where the third interface includes the target image.

In this embodiment of this application, the electronic device may jump out of the current interface, that is, the first editing interface after saving the target image, and further display the third interface including the target image. This method can satisfy a requirement of the user of wanting to view the editing effect of the fourth still image.

With reference to the second aspect, in some embodiments, the first editing interface includes a resetting control, and the method further includes:
displaying the first editing interface in response to a user operation performed on the resetting control, where the first editing interface includes the first thumbnail, the second thumbnail, and the second still image, and the first thumbnail is in the selected state.

In this embodiment of this application, the electronic device may reset the first editing interface, and may further reselect a still image in the dynamic image for editing, saving, and other operations. This method can satisfy a requirement of the user of wanting to operate a plurality of frames of still images in the dynamic image, so that a complex operation that the user needs to manually enter the current interface again after jumping out of the current interface can be avoided, so that user experience can be effectively improved.

With reference to the second aspect, in some embodiments, the first still image is a cover image of the first dynamic image.

With reference to the second aspect, in some embodiments, saving the third still image by the electronic device includes:
obtaining a storage path that corresponds to the first dynamic image, an initial exchangeable image file Exif, and initial database information, where the initial Exif includes a parameter of the first dynamic image, and the parameter includes a time;
obtaining, by the electronic device based on the storage path corresponding to the first dynamic image and a current time, a storage path corresponding to the third still image;
creating a target file corresponding to the third still image based on the storage path corresponding to the third still image;
modifying the time in the initial Exif as the current time, to obtain target Exif;
writing the target Exif and the third still image into the target file;
updating the initial database information with file information of the third still image, to obtain target database information, where the file information of the third still image includes the storage path corresponding to the third still image and a creation time of the target file; and
storing the target database information into a database.

In this embodiment of this application, the electronic device may generate data of the third still image based on data of the first dynamic image. This method modifies the data of the first dynamic image, and the speed is higher than a speed of regenerating the data of the third still image, so that a speed of saving the third still image can be increased.

With reference to the second aspect, in some embodiments, the displaying a first editing interface includes:
obtaining the video corresponding to the first dynamic image; and
decoding the video by using an encoding and decoding module, to obtain the plurality of frames of still images.

With reference to the second aspect, in some embodiments, the second interface is a full-size image interface that corresponds to the third still image and that is in a gallery application of the electronic device, where the second interface includes at least one of an editing control, a favorite control, a sharing control, and a delete control.

In this embodiment of this application, the electronic device may process the third still image in response to a user operation performed on at least one of the foregoing editing control, favorite control, sharing control, and delete control, for example, share the third still image in response to a user operation performed on the sharing control. The method can satisfy a requirement of the user of performing further operation on the third still image, and can reduce user operation that the user enters the second interface from the gallery application after exiting from the first editing interface, so that user experience can be effectively improved.

According to a third aspect, this application provides an electronic device. The electronic device includes one or more processors and one or more memories. The one or more memories are coupled to the one or more processors, the one or more memories are configured to store computer program code, the computer program code includes computer instructions, and when the one or more processors execute the computer instructions, the electronic device is enabled to perform the method described in the first aspect and any possible implementation of the first aspect.

According to a fourth aspect, an embodiment of this application provides a chip system. The chip system is used in an electronic device, the chip system includes one or more processors, and the processor is configured to invoke computer instructions to enable the electronic device to perform the method described in the first aspect and any possible implementation of the first aspect.

According to a fifth aspect, this application provides a computer-readable storage medium, including instructions. When the instructions are run on an electronic device, the electronic device is enabled to perform the method described in the first aspect and any possible implementation of the first aspect.

According to a sixth aspect, this application provides a computer program product including instructions. When the computer program product is run on an electronic device, the electronic device is enabled to perform the method described in the first aspect and any possible implementation of the first aspect.

It may be understood that, the electronic device provided in the third aspect, the chip system provided in the fourth aspect, the computer storage medium provided in the fifth aspect, and the computer program product provided in the sixth aspect are all configured to perform the method provided in this application. Therefore, for beneficial effects that can be achieved, refer to beneficial effects in the corresponding method. Details are not described herein again.

### BRIEF DESCRIPTION OF DRAWINGS

FIG. 1A to FIG. 1D are examples of user interfaces in which an "editing" function for any still image in a dynamic image is enabled;
FIG. 2A to FIG. 2K are examples of user interfaces when an electronic device makes graffiti on a still image in a dynamic image;
FIG. 3A to FIG. 3C are examples of user interfaces when an electronic device crops a still image in a dynamic image;
FIG. 4 is a flowchart of an image processing method according to an embodiment of this application;
FIG. 5 is a diagram of a structure of a file format of a dynamic image according to an embodiment of this application;
FIG. 6A is a diagram of a hardware structure of an electronic device according to an embodiment of this application;
FIG. 6B is a diagram of a software architecture of an electronic device according to an embodiment of this application;
FIG. 7A, FIG. 7B, and FIG. 7C, and FIG. 8A, FIG. 8B, and FIG. 8C are flowcharts of an image processing method according to an embodiment of this application;
FIG. 9 and FIG. 10A to FIG. 10D are examples of user interfaces when an electronic device saves a still image in a dynamic image;
FIG. 11 is a flowchart of an image processing method according to an embodiment of this application;
FIG. 12 is a diagram of a structure of a file format of a dynamic image according to an embodiment of this application; and
FIG. 13 and FIG. 14A, FIG. 14B, and FIG. 14C are flowcharts of an image processing method according to an embodiment of this application.

### DESCRIPTION OF EMBODIMENTS

Terms used in the following embodiments in this application are merely intended to describe specific embodiments, but are not intended to limit this application. The singular expressions "one", "one type of", "the", "the foregoing", "that", and "this" used in this specification and the appended claims of this application are also intended to include plural expressions, unless otherwise specified in the context clearly. It should also be understood that, the term "and/or" used in this application indicates and includes any or all possible combinations of one or more listed items.

Currently, many electronic devices have a function of shooting a dynamic image. The dynamic image may also be referred to as a dynamic picture.

For example, a shooting interface of a camera application of an electronic device includes a control for enabling a dynamic image. In this case, the electronic device may enable a function of shooting a dynamic image in response to a user operation of tapping the control. Further, when detecting a user operation of indicating to perform shooting, the electronic device may shoot a dynamic image in response to the user operation. In embodiments of this application, a quantity of frames and duration of the dynamic image are not limited. For example, the duration of the dynamic image may include 3s, which is respectively 1.5s before a moment at which the electronic device detects a user operation of indicating to perform shooting and 1.5s after the moment. The dynamic image includes still images shot by the electronic device within the 3s, and may include 90 frames.

In some scenarios, due to a personalized requirement, a user expects to obtain a particular frame of still image in the dynamic image and edit the still image. For example, when a dynamic image of a character close-up is shot, the user is satisfied with a particular frame of character image in the dynamic image, and expects to save the character image independently. For example, in a dynamic image of recording a movement process of an object, the user expects to perform an operation such as text editing on a particular frame of object image in the dynamic image.

Currently, the electronic device needs to first set a still image selected by the user from a dynamic image as a cover image before performing operations such as saving and editing on the image. This method results in complex user operations, and poor user experience.

In view of this, embodiments of this application provide an image processing method, to improve efficiency of processing a still image in a dynamic image. Processing includes two parts: editing and saving, and the two parts are separately described below.

### (I) Editing part

In embodiments of this application, an electronic device may display a first editing interface corresponding a dynamic image. A user may select a target frame from the first editing interface, and trigger to perform first editing on the target frame. Correspondingly, the electronic device displays a second editing interface for performing first editing on the target frame in response to a user operation of selecting the target frame from the dynamic image for first editing; and in response to a user operation performed on the second editing interface, performs editing processing on the target frame on the second editing interface, and displays an edited target frame. In this method, the user may select any frame of still image in the dynamic image for editing, and user operation is little, so that user experience can be improved.

The electronic device is an electronic device that has a display service, such as a smartphone, a tablet computer, a large-screen device, or the like. The image processing method provided in embodiments of this application may be embodied in the electronic device as an "editing" function.

**First, the "editing" function for any still image in the dynamic image provided in embodiments of this application is described with reference to a user interaction (user interface, UI) interface provided in the electronic device.**

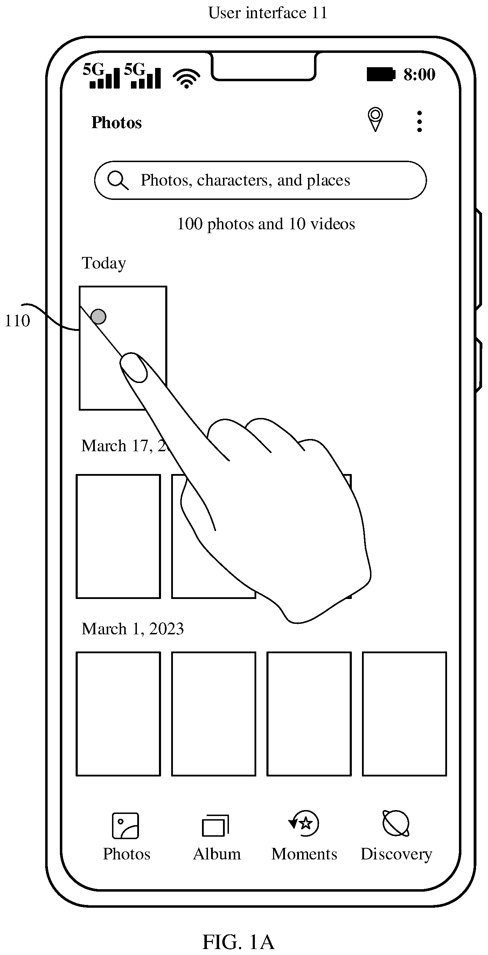

FIG. 1A to FIG. 1D are examples of related UIs in which an "editing" function for any still image in a dynamic image is enabled.

FIG. 1A is an example of a user interface 11 involved in an embodiment of this application. The user interface 11 is an example of an application interface of a gallery application provided in this embodiment of this application. The user interface 11 includes a thumbnail 110 of a first dynamic image. Optionally, the user interface 11 may further include a still image, a video, and the like. This is not limited herein.

The dynamic image is an image with a dynamic effect. The dynamic effect may be reflected as a dynamic effect generated by switching display of a plurality of still images or video playback according to a preset rule. The still image is an image with a still and unchanged picture. In embodiments of this application, the dynamic image may include a still image (for example, a cover image) and a video clip (for example, an MP4 file). For example, when displaying the dynamic image, the electronic device may display the cover image of the dynamic image when not receiving a user operation, and may display a video corresponding to the dynamic image when receiving a user operation (for example, a long press operation).

It should be noted that, the dynamic image includes a video clip. In other words, the dynamic image may include a plurality of frames of still images obtained based on the video.

The cover image may also be referred to as a cover frame. For example, content of the cover image is the same as content of a frame of image in the video, and a resolution of the cover image is different from a resolution of the frame of image.

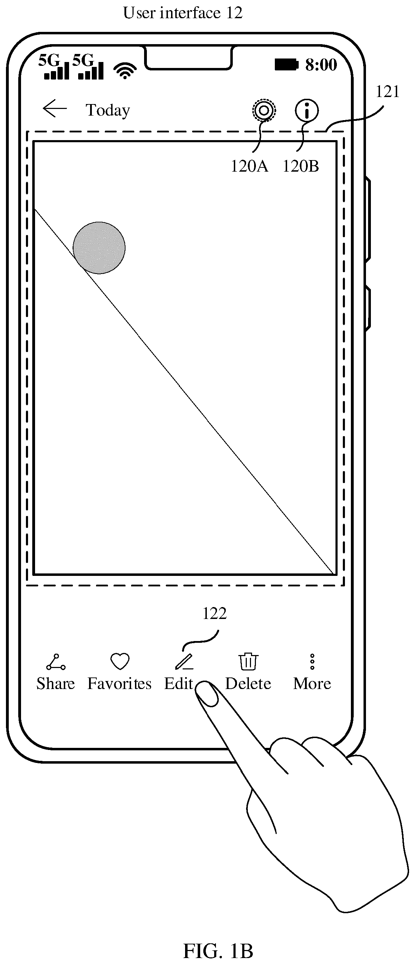

As shown in FIG. 1A, the electronic device may detect a user operation of indicating to display a thumbnail 110. In response to the operation, the electronic device may display a user interface 12 shown in FIG. 1B.

FIG. 1B is an example of a preview interface corresponding to a first dynamic image according to an embodiment of this application. As shown in FIG. 1B, the preview interface may include an identifier 120A, a parameter 120B, a preview window 121, and an editing control 122. It should be noted that, the preview interface corresponding to the first dynamic image may also be referred to as a first interface, and the editing control 122 may also be referred to as a first control.

The identifier 120A indicates that an image displayed on the current interface is a dynamic image. The parameter 120B indicates information such as a shooting parameter of the image displayed on the current interface. The preview window 121 is configured to display the first dynamic image. For example, the preview window 121 performs loop playback on the dynamic image. In other words, the image displayed in the preview window 121 may not be still. The editing control 122 is configured to edit the first dynamic image. Optionally, the preview interface may further include a sharing control, a favorite control, and the like. This is not limited in embodiments of this application.

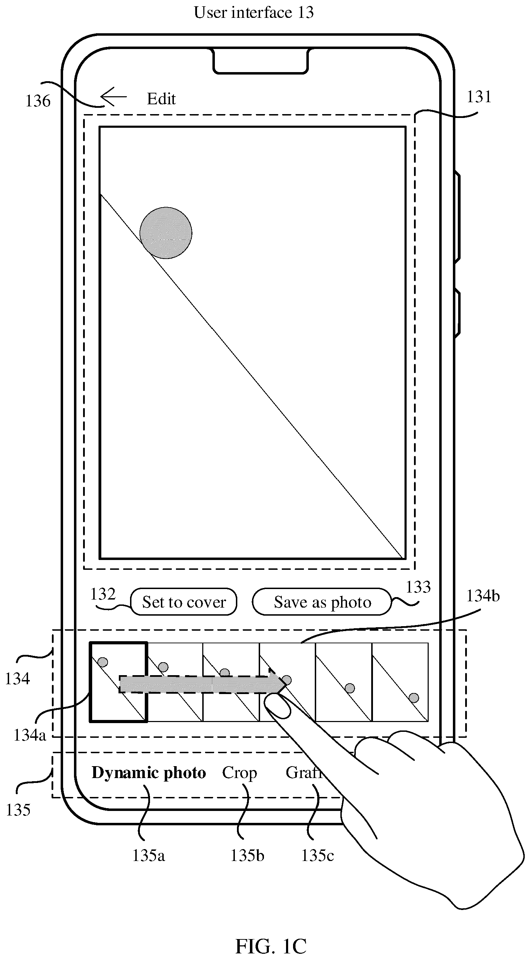

As shown in FIG. 1B, when detecting a user operation for the editing control 122, the electronic device may enable an editing function for the first dynamic image in response to the user operation, and displays an editing interface corresponding to the first dynamic image. For example, when detecting the user operation, the electronic device may display a user interface 13 shown in FIG. 1C. To be specific, the user interface 13 is the editing interface corresponding to the first dynamic image. It should be noted that, the editing interface (that is, the user interface 13) corresponding to the first dynamic image may also be referred to as a first editing interface.

The user interface 13 includes a preview window 131, a set-to-cover control 132, a save-as control 133 (which may also be referred to as a first save control), a slider bar 134, an option bar 135, and a return control 136. An image displayed in the preview widow 131 may be a cover image of the first dynamic image. A thumbnail 134a selected in the slider bar 134 is a thumbnail corresponding to the cover image. The cover image may be any frame in the first dynamic image. This is not limited in embodiments of this application.

The slider bar 134 is configured to display thumbnails of still images that constitute the dynamic image (that is, the first dynamic image) in the preview window 131, such as the thumbnail 134a corresponding to the cover image and a thumbnail 134b of a first still image that are shown in FIG. 1C. FIG. 1C shows examples of six frames of still images in the user interface 13. A quantity of images displayed in the slider bar is not limited in embodiments of this application, and may be 10, or the like.

Optionally, the images in the slider bar 134 may be displayed in response to a sliding operation of the user. For example, the slider bar 134 in the user interface 13 may display only thumbnails of some still images of the first dynamic image. When the electronic device detects a left-sliding operation for the slider bar 134, the slider bar 134 may display a thumbnail of a still image not displayed in FIG. 1B.

In embodiments of this application, for example, a bold border frame represents an image selected in the current slider bar. For example, the user may select a thumbnail from the slider bar, and the thumbnail may be displayed with a bold border frame, to indicate the selected state.

Optionally, when the user does not perform a selection operation on the slider bar, for example, on the interface obtained after the editing control 122 is tapped, and receives the selection operation of the user, the thumbnail in the selected state may be the thumbnail corresponding to the preset still image, for example, the thumbnail corresponding to the cover image. As shown in FIG. 1C, a border frame of the thumbnail 134a corresponding to the cover image in the slider bar 134 is in a bold state. In other words, the image selected in the slider bar 134 is the thumbnail 134a corresponding to the cover image. In another embodiment of this application, a color image may also represent a selected image, and another greyed-out still image represents an unselected image. This is not limited in embodiments of this application.

The preview window 131 is configured to display a still image selected in the dynamic image. As shown in FIG. 1C, the image selected in the slider bar 134 is the thumbnail 134a corresponding to the cover image, and the image displayed in the preview window 131 is the cover image.

The set-to-cover control 132 is configured to set the image displayed in the preview window 131 to the cover image of a still image.

The save-as control 133 is configured to save the image displayed in the preview window 131 as a still image into a gallery.

The option bar 135 may include a dynamic image home page option 135a and various editing options. The various editing options may include a cropping option 135b, a graffiti option 135c, and the like. Specific content and a quantity of editing options are not limited in embodiments of this application. The editing option may also be referred to as a second control. The dynamic image home page option 135a may be referred to as a third control.

In embodiments of this application, for example, a bold font represents an option interface selected in the option bar 135, and the option interface is the current interface. As shown in FIG. 1C, in this case, the dynamic image home page option 135a in the option bar 135 is in a bold state. To be specific, the dynamic image home page option 135a is in the selected state, and the current user interface 13 is the editing interface corresponding to the dynamic image.

The return control 136 is configured to display an interface previous to the current interface. For example, when detecting a user operation for the return control 136, the electronic device may display the user interface 12 shown in FIG. 1B in response to the user operation. It should be noted that, in some embodiments of this application, after the cover image of the dynamic image is modified, the preview window 121 in the user interface 12 shown in FIG. 1B may display a modified dynamic image.

In some embodiments, the user may select any frame of still image in the first dynamic image from the slider bar (for example, the slider bar 142) in an editing interface (for example, a user interface 14) corresponding to the first dynamic image.

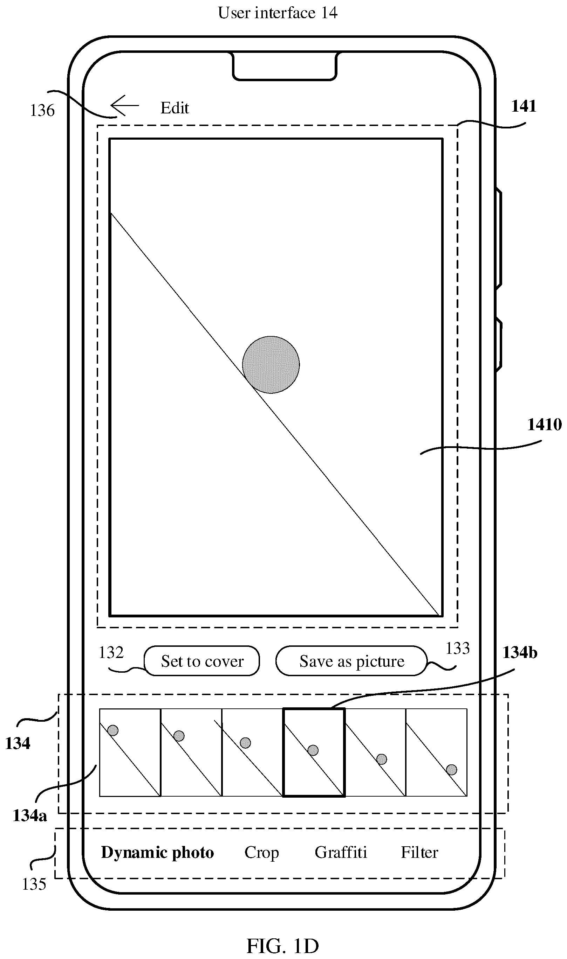

As shown in FIG. 1C, when detecting a user operation of sliding to the thumbnail 134b of the first still image, the electronic device may display the editing interface corresponding to the first still image, for example, the user interface 14 shown in FIG. 1D in response to the user operation. It should be noted that, the foregoing sliding operation is merely an example of an implementation, or may be a tapping or voice operation. For example, when detecting a user operation of tapping the thumbnail 134b of the first still image, the electronic device may display the editing interface corresponding to the first still image.

It should be noted that, in embodiments of this application, any user operation may be a touch operation (for example, a tapping operation, a long press operation, an upward-swiping operation, a downward-swiping operation, or a lateral-swiping operation) of the user, or may be a non-touch operation (for example, an air gesture), or may be a voice instruction of the user. This is not specifically limited in embodiments of this application.

The user interface 14 includes a preview window 141, the slider bar 134, the set-to-cover control 132, the save-as control 133, the option bar 135, and the return control 136. The still image selected in the slider bar 134 is the thumbnail 134b of the first still image. The image displayed in the preview window 141 is the first still image. The thumbnail 134a corresponding to the cover image in the slider bar 134 is in an unselected state. A difference between the user interface 14 and the user interface 13 may be that the images selected in the slider bar 134 are different, and content displayed in the preview window 131 and the preview window 141 is different.

Not limited to a manner of enabling the "editing" function of the electronic device for the still image in the dynamic image shown in FIG. 1A to FIG. 1D, the user may alternatively enable the "editing" function in another manner, for example, long press the dynamic image to enable the "editing" function, or long press any frame in the dynamic image to enable the "editing" function for the frame.

In some embodiments, after enabling the editing function for one frame of still image in the dynamic image, the electronic device may perform editing operations such as graffitiing, cropping, filtering, and watermarking on the still image.

The following is described by using a graffitiing function as an example.

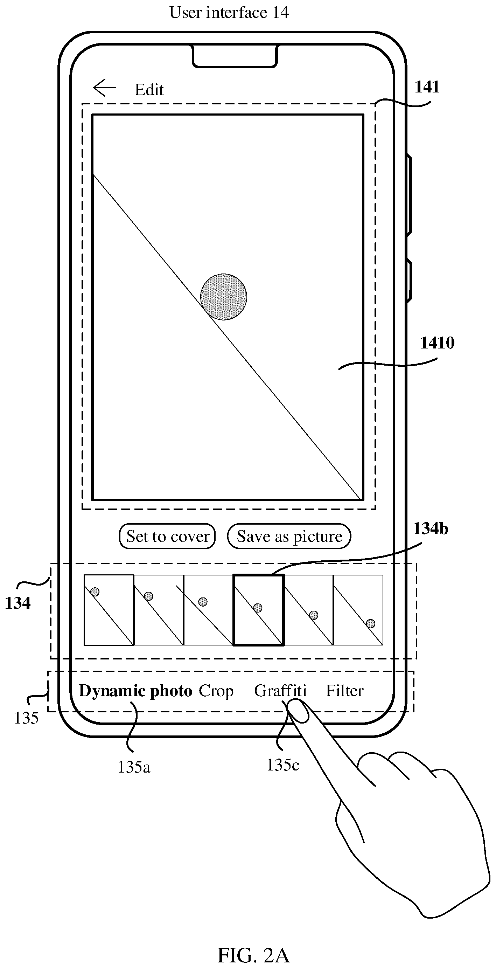

FIG. 2A to FIG. 2K are examples of UI diagrams involved when an electronic device makes graffiti on a still image in a dynamic image.

FIG. 2A is an example of the user interface 14 for editing a first still image 1410 in the first dynamic image according to an embodiment of this application. The user interface 14 includes the slider bar 134 and the preview window 141. The image selected in the slider bar 134 is the thumbnail 134b in the first still image 1410. The image displayed in the preview window 141 is the first still image 1410.

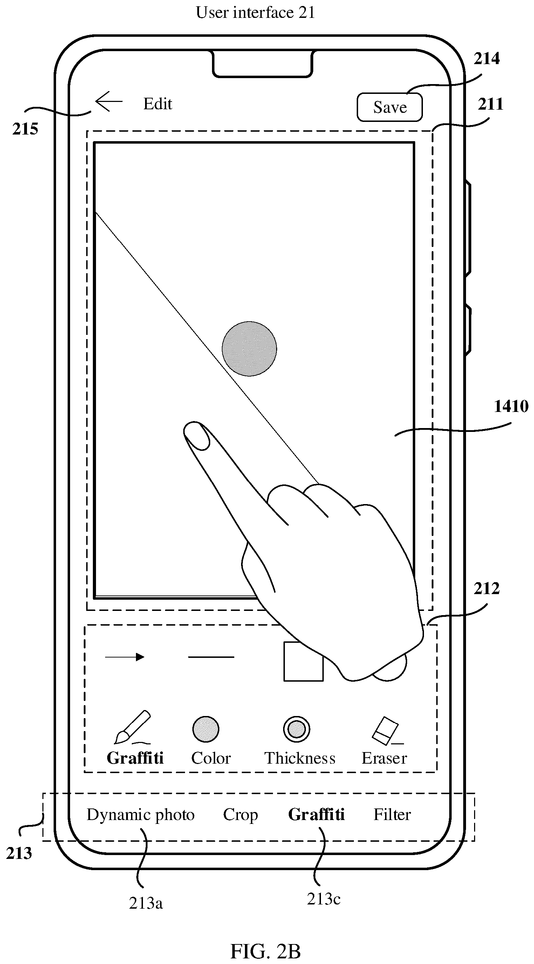

As shown in FIG. 2A, when detecting a user operation performed on the graffiti option 135c, the electronic device may display a user interface 21 shown in FIG. 2B in response to the operation. It should be understood that, an example in which the second control is the graffiti option 135c is used for description herein, and the user interface 21 is a second editing interface corresponding to the second control.

The user interface 21 includes an editing window 211, a graffiti function area 212, an option bar 213, a save control 214 (which may also be referred to as a second save control), and a return control 215.

The editing window 211 is configured to display the first still image 1410 and a graffiti effect of making graffiti on the first still image 1410.

The graffiti function area 212 includes a plurality of graffiti function controls, for example, a straight line control, pencil settings, and an eraser. This is not limited in embodiments of this application.

The option bar 213 includes a selected option (that is, a graffiti option 213c) and unselected options (for example, a dynamic image home page option 213a, a cropping option, and a filter option). In FIG. 2B, the graffiti option 213c is bold, which represents that the graffiti option 213c is in a selected state, and indicates that the current interface (that is, a user interface 22) is an interface for making graffiti on the still image. It may be understood that, the interface when the graffiti option is bold is a graffiti interface for the image in the preview window. The interface is configured to perform a graffiti operation on the image in the preview window. For example, the user interface 21 is a graffiti interface for the first still image 1410.

The return control 215 is configured to return a preview interface corresponding to the first dynamic image. For example, when detecting a user operation for the return control 215, the electronic device may display the user interface 12 shown in FIG. 1B.

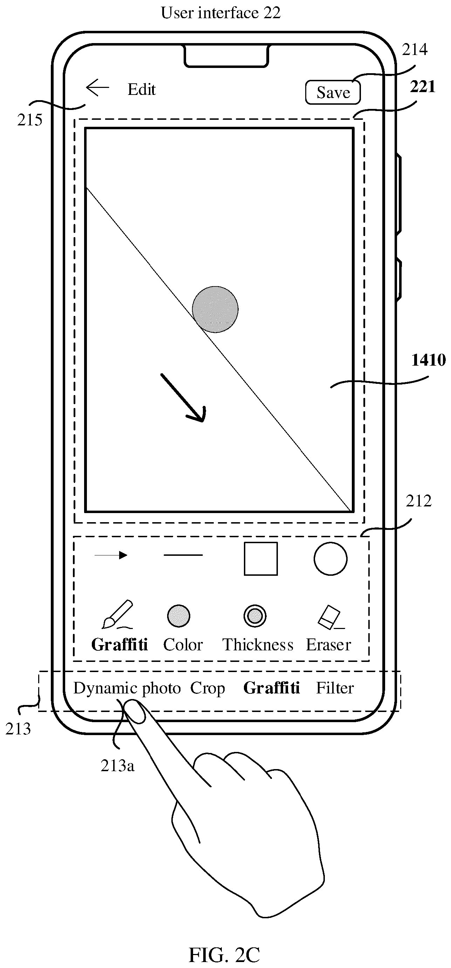

In some embodiments, the user may make graffiti on the first still image 1410 in the editing window 211 by using a graffiti function of the graffiti function area 212. As shown in FIG. 2B, when detecting a graffiti operation performed on the editing window 211 (for example, the graffiti operation is a line with an arrow), the electronic device may display the user interface 22 shown in FIG. 2C in response to the operation.

It should be noted that, in embodiments of this application, the first still image 1410 may also be referred to as a fourth still image. The graffiti operation is a user operation performed on the fourth still image. A quantity of user operations performed on the fourth still image is not limited herein. There may be one user operation or a plurality of user operations. For example, the graffiti operation may include a user operation of selecting a graffiti function control in the graffiti function area 212 and an operation of making graffiti in the editing window 211.

The user interface 22 may include an editing window 221, the graffiti function area 212, the option bar 213, the save control 214, and the return control 215. The editing window 221 is configured to display a still image on which graffiti is made. A difference between the user interface 22 and the user interface 21 may be a difference between images displayed in the editing windows. It should be noted that, in embodiments of this application, the first still image 1410 may also be referred to as a fourth still image. In this case, content displayed in the editing window 221 is an editing effect of the fourth still image, and specifically the first still image 1410 with a graffiti trace.

In some embodiments, after the user makes graffiti on the still image in the dynamic image, the electronic device may be indicated, by a user operation, to save the still image on which graffiti is made. For a specific process in which the electronic device saves the still image on which graffiti is made, refer to related content of the following embodiment.

In an implementation, after making graffiti on the still image in the dynamic image, the electronic device may display the still image on which graffiti is made in an editing interface corresponding to the dynamic image in response to a user operation of returning to the editing interface corresponding to the dynamic image, and when receiving a user operation of saving the still image on which graffiti is made as a picture, further save the still image on which graffiti is made.

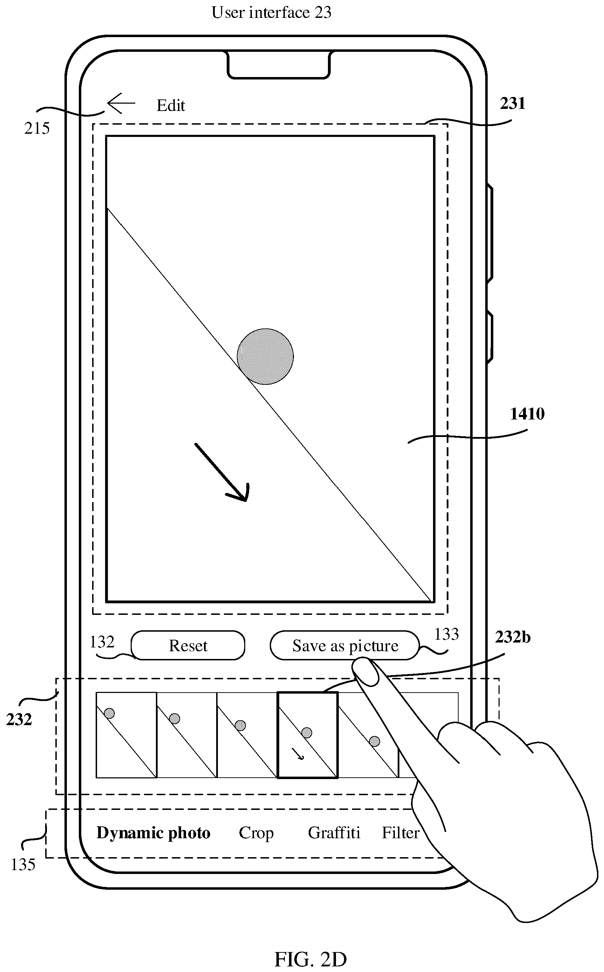

As shown in FIG. 2C, when detecting a user operation for the dynamic image home page option 213a in the user interface 22, the electronic device displays a user interface 23 shown in FIG. 2D. The user interface 23 includes a preview window 231 and a slider bar 232. The preview window 231 displays the still image on which graffiti is made. An image selected in the slider bar 232 is also a thumbnail 232b of the still image on which graffiti is made. Optionally, an unselected image in the slider bar 232 may be in a closed state, for example, is non-touchable.

It should be noted that, for example, a bold border frame indicates a selected state in FIG. 2D. In another embodiment of this application, a thumbnail in the selected state may alternatively be greyed out for display, or the thumbnail in the selected state is displayed with color and another thumbnail in an unselected state is greyed out for display. This is not limited in embodiments of this application.

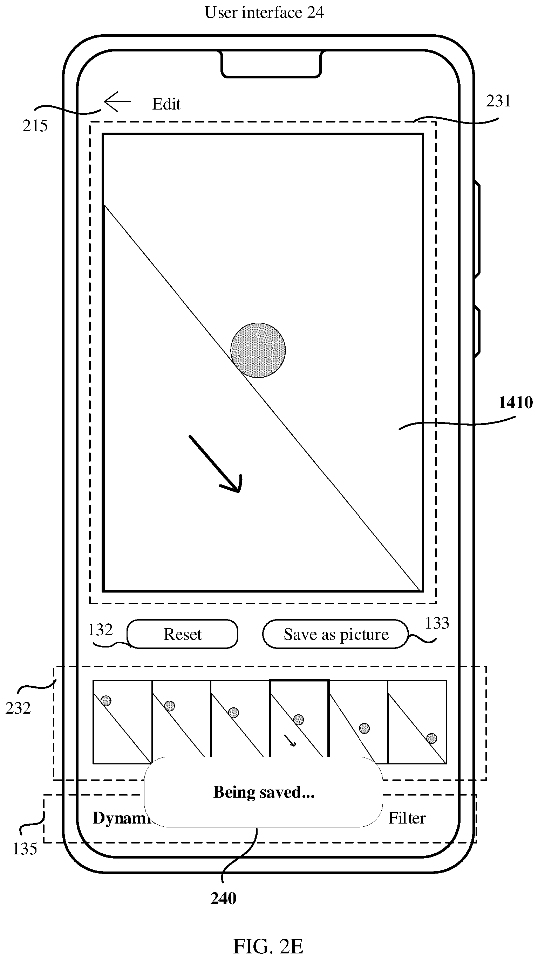

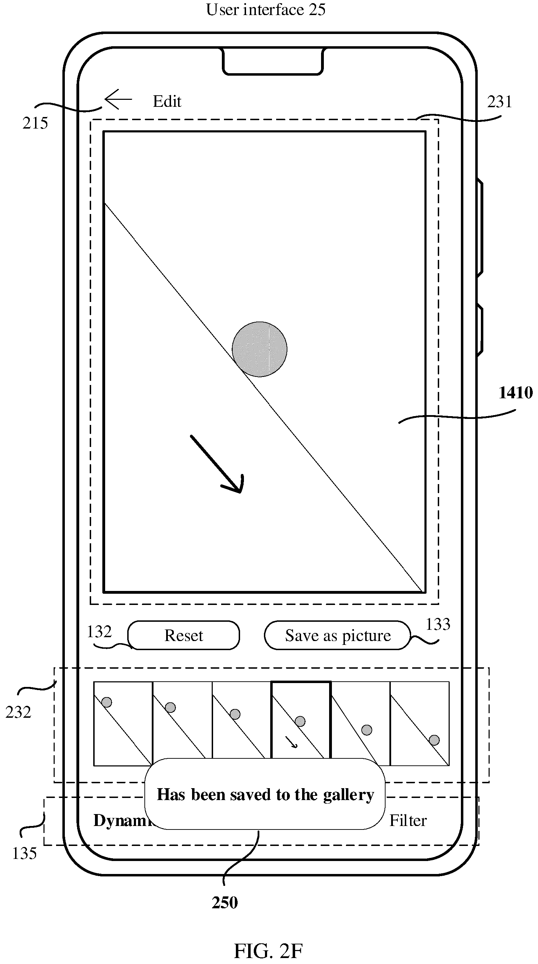

Further, when detecting a user operation for the save-as control 133, the electronic device may save, in response to the user operation, the still image on which graffiti is made, and display a user interface 24 shown in FIG. 2E in a saving process. The user interface 24 includes a prompt box 240. The prompt box 240 is configured to prompt that the still image on which graffiti is made is being saved currently. For example, content of the prompt box 240 may be "being saved". After the still image is successfully saved, a user interface 25 shown in FIG. 2F is displayed. The user interface 25 may include a prompt box 250. The prompt box 250 is configured to prompt that the still image on which graffiti is made has been successfully saved. For example, content of the prompt box 250 may be "has been saved to the gallery". Except the prompt box, other display content of the user interface 24 and the user interface 25 may be the same as that of the user interface 23. Details are not described herein again. The prompt box 240 may also be referred to as a first prompt box. The prompt box 250 may also be referred to as a second prompt box.

Further, after displaying the prompt box 250 for preset duration, the electronic device may not display the prompt box 250, and displays the user interface 23. In other words, after saving one frame of still image in the dynamic image as a picture by using the save-as control in the editing interface corresponding to the dynamic image, the electronic device does not exit from display of the current interface. Further, the user may continue to edit the still image in the dynamic image in the current interface (that is, the editing interface corresponding to the dynamic image). It may be understood that, the method can satisfy a requirement of the user for editing the plurality of still images in the dynamic image, so that user experience can be improved.

Optionally, when detecting a user operation for the save-as control 133, the electronic device may alternatively save, in response to the user operation, the still image on which graffiti is made, and does not display the user interface 24 shown in FIG. 2E and the user interface 25 shown in FIG. 2F, and still displays the current interface (for example, the user interface 23).

In another implementation, after making graffiti on the still image in the dynamic image, the electronic device may save, in response to a save operation performed on the graffiti interface for the still image, the still image on which graffiti is made.

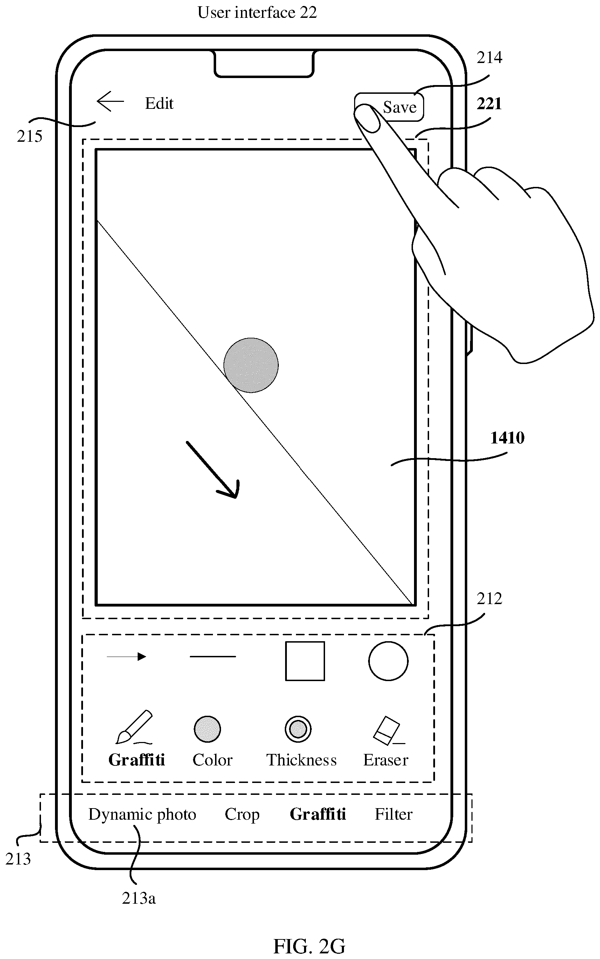

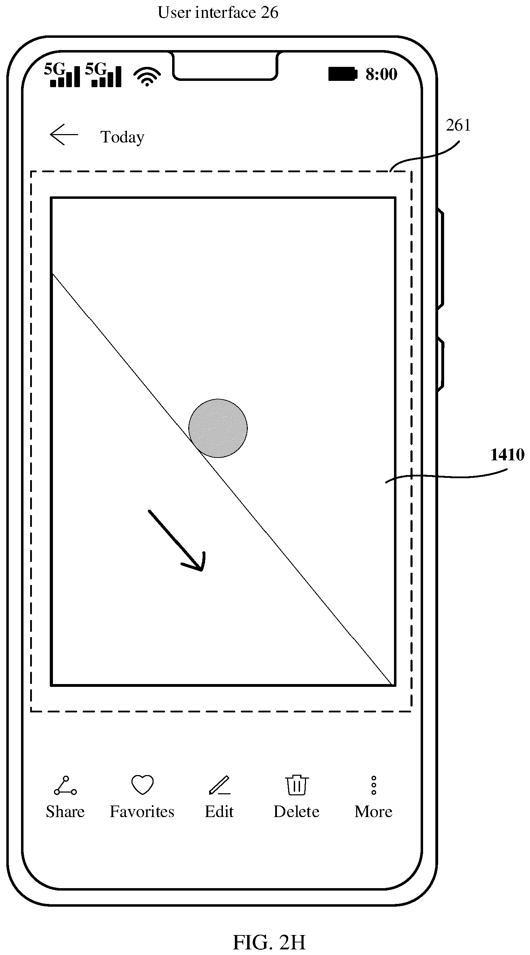

As shown in FIG. 2G, when detecting a user operation for the save control 214 in the user interface 22, the electronic device saves the image on which graffiti is made (for ease of description, the image is briefly referred to as a graffiti image), that is, the image in the editing window 221, and further displays a preview interface corresponding to the graffiti image, for example, a user interface 26 shown in FIG. 2H. The user interface 26 includes a preview window 261 and other controls. The preview window is configured to display the graffiti image.

In embodiments of this application, after saving an edited image, the electronic device jumps to a full-size image interface of the image, and further, the user may perform operations such as editing or sharing on the image. The method can satisfy a requirement of the user for performing a processing operation on the saved image, so that user experience can be improved. The full-size image interface (for example, the user interface 26) to which the electronic device jumps after saving the edited image may also be referred to as a second interface.

It should be noted that, a resolution of a graffiti image displayed by the electronic device in the preview window may be different from a resolution of the saved graffiti image. For example, the electronic device may increase the resolution of the graffiti image displayed in the preview window, and further save the graffiti image whose resolution is increased. In embodiments of this application, an image with a high resolution is saved, and the image with a high resolution may be displayed when the user views the graffiti image, so that user experience can be improved.

For example, a resolution of the image displayed in the editing window 221 in the user interface 22 shown in FIG. 2G is different from a resolution of the image displayed in the preview window 261 in the user interface 26 shown in FIG. 2H. The resolution of the image displayed in the user interface 26 is higher. For how the electronic device obtains the graffiti image whose resolution is increased, refer to related embodiments in the following description. This is not described in detail herein temporarily.

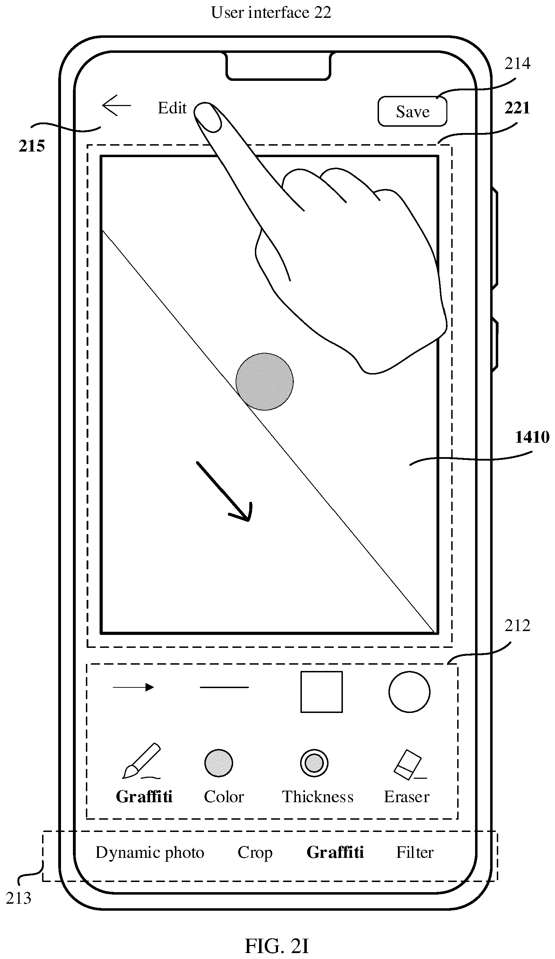

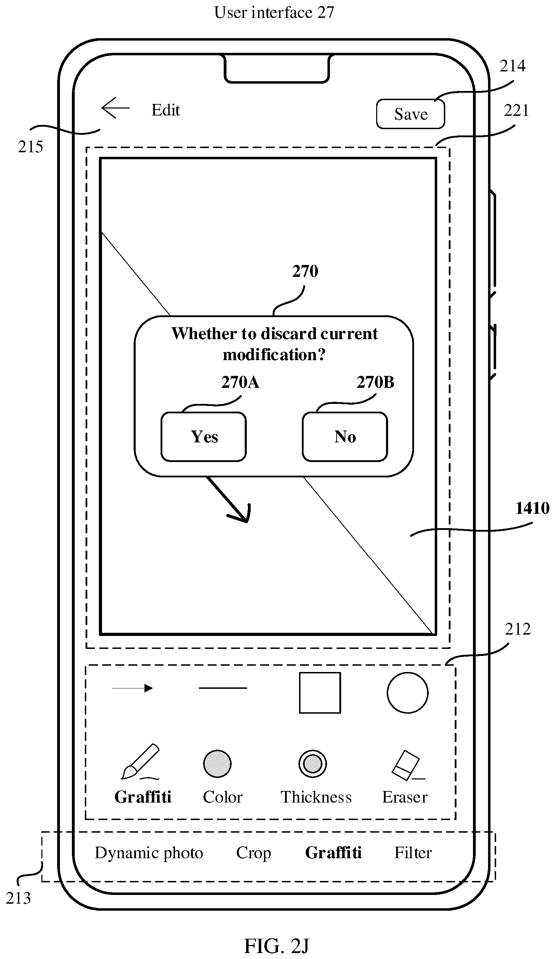

In some other embodiments of this application, after making graffiti on the still image in the dynamic image, the user may abandon the graffiti operation, and return to the preview interface. As shown in FIG. 2I, when detecting a user operation for the return control 215 in the user interface 22, the electronic device may display a user interface 27 shown in FIG. 2J in response to the user operation. The user interface 27 includes the editing window 221, the graffiti function area 212, the option bar 213, the save control 214, the return control 215, and a prompt box 270. The prompt box 270 includes a determining control 270A and a cancel control 270B. If detecting a user operation for the determining control 270A, the electronic device may display the user interface 12 shown in FIG. 1B. If detecting a user operation for the cancel control 270B, the electronic device may display the user interface 22 shown in FIG. 2I.

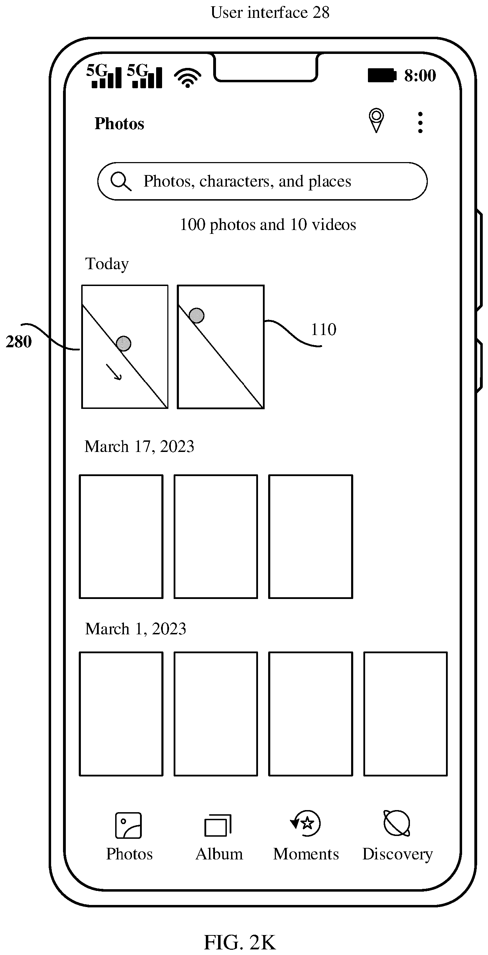

In some embodiments, when the user opens the gallery application, the electronic device displays the thumbnail of the graffiti image after saving the graffiti image. For example, when receiving a user operation of tapping the save-as control 133 shown in FIG. 2C or a user operation of tapping the save control 214 shown in FIG. 2G, the electronic device saves the graffiti image. After saving the graffiti image, if receiving a user operation of opening the gallery by the user, the electronic device may display a user interface 28 shown in FIG. 2K. The user interface 28 includes a thumbnail 280 corresponding to the graffiti image and the thumbnail 110 corresponding to the first dynamic image. A difference between the user interface 28 and the user interface 11 may be that a thumbnail 280 is newly added to the user interface 28, and positions of the thumbnails 110 in the two interfaces are different.

**The following is described by using a cropping function as an example.**

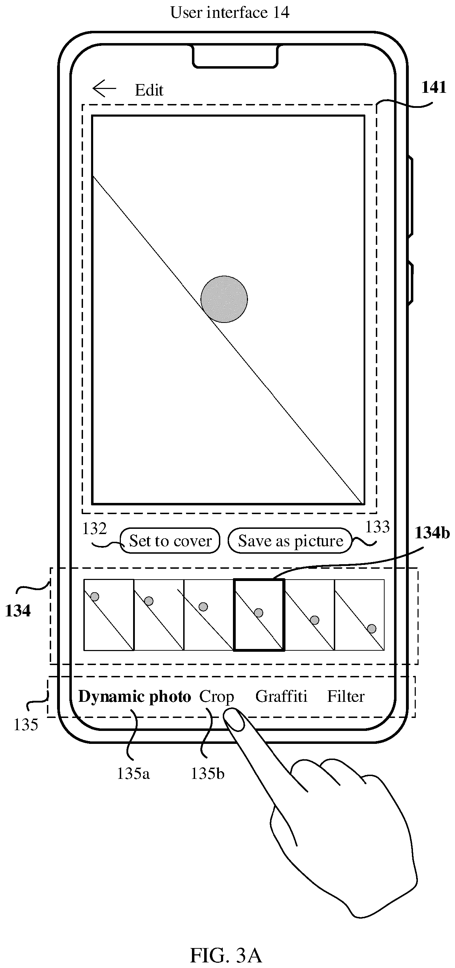

FIG. 3A to FIG. 3C are examples of UI diagrams involved when an electronic device makes graffiti on a still image in a dynamic image.

FIG. 3A is an example of the user interface 14 for editing the first dynamic image in the first dynamic image according to an embodiment of this application. The user interface 14 includes the slider bar 134 and the preview window 141. The image selected in the slider bar 134 is the thumbnail 134b in the first still image. The image displayed in the preview window 141 is the first still image.

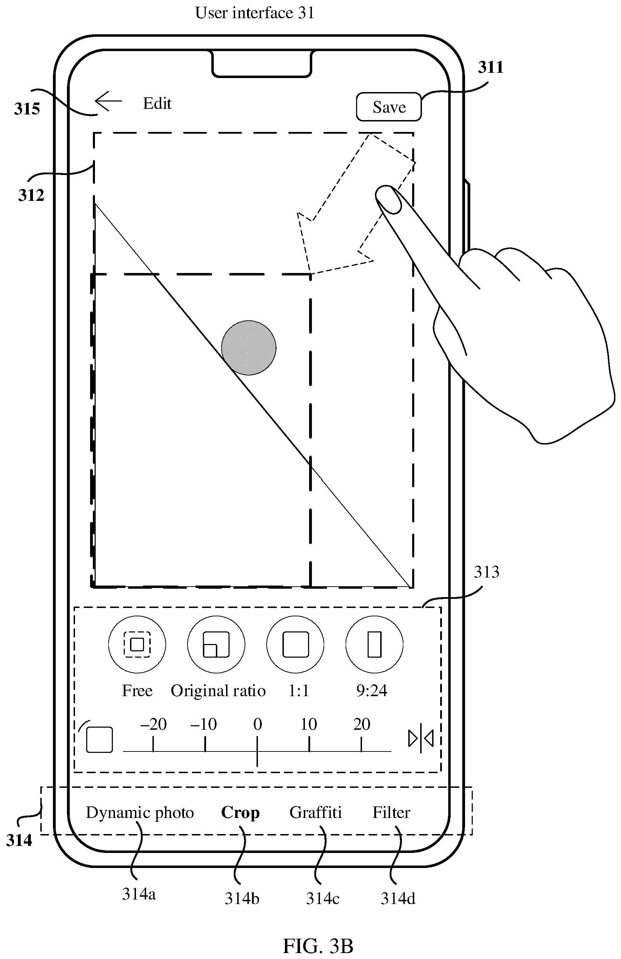

As shown in FIG. 3A, when detecting a user operation performed on the cropping option 135b, the electronic device may display a user interface 31 shown in FIG. 3B in response to the operation. The user interface 31 is a cropping interface for the first still image.

The user interface 31 may include a save control 311, a cropping window 312, a cropping function area 313, an option bar 314, and a return control 315.

The save control 311 is configured to save a cropped image.

The cropping window 312 is configured to display a cropping process.

The cropping function area 313 includes a plurality of cropping function controls, for example, a free adjustment control, an original scaling control, and a rotation control. This is not limited in embodiments of this application.

The option bar 314 includes a selected option (that is, a cropping option 314b) and unselected options (for example, a dynamic image home page option 314a, a graffiti option 314c, and a filter option 314d). In FIG. 3B, the selected cropping option 314b indicates that the current interface (that is, a user interface 32) is an interface for cropping the still image.

The return control 215 is configured to return the preview interface corresponding to the first dynamic image. For example, when detecting a user operation for the return control 215, the electronic device may display the user interface 12 shown in FIG. 1A.

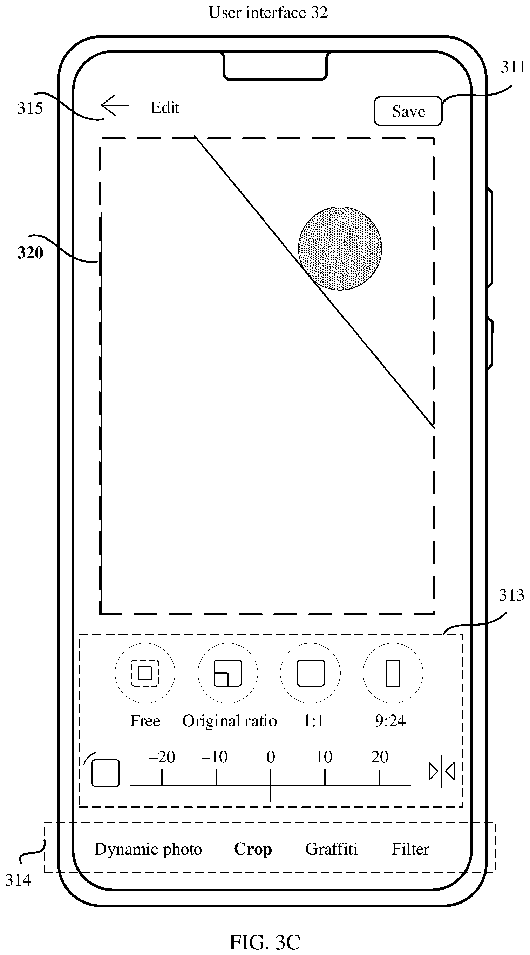

In some embodiments, the user may crop the still image in the cropping window 312 by setting the cropping function area 313. As shown in FIG. 2B, the electronic device may detect a user operation performed on the cropping window 312. In response to the operation, the electronic device may display the user interface 32 shown in FIG. 3C.

It should be noted that, in embodiments of this application, the image displayed in the cropping window 312 may also be referred to as a fourth still image. The user operation performed on the cropping window 312 is a user operation performed on the fourth still image. A quantity of user operations performed on the fourth still image is not limited herein. There may be one user operation or a plurality of user operations. For example, the user operation performed on the cropping window 312 may include a user operation of selecting a cropping function control in the cropping function area 313 and an operation of performing cropping in the cropping window 312.

The user interface 32 includes a cropping window 320, the save control 311, the cropping function area 313, the option bar 314, and the return control 315. The cropping window 320 is configured to display a cropped image. A difference between the user interface 23 and the user interface 22 may be a difference between images displayed in the cropping windows. It should be noted that, in embodiments of this application, the image displayed in the cropping window 312 may also be referred to as a fourth still image. In this case, content displayed in the editing window 221 is an editing effect of the fourth still image, and specifically a partial image obtained after the image displayed in the cropping window 312 is cropped.

In some embodiments, after the user crops the still image, the electronic device may be indicated, by a user operation, to save the cropped still image. For a user interface in a process in which the electronic device saves the cropped still image, refer to the user interface in the process of saving the still image on which graffiti is made. Details are not described herein. In embodiments of this application, the saved cropped still image or the saved still image on which graffiti is made may be referred to as a target image.

An image processing method provided in an embodiment of this application is described below based on the user interface displayed on the electronic device.

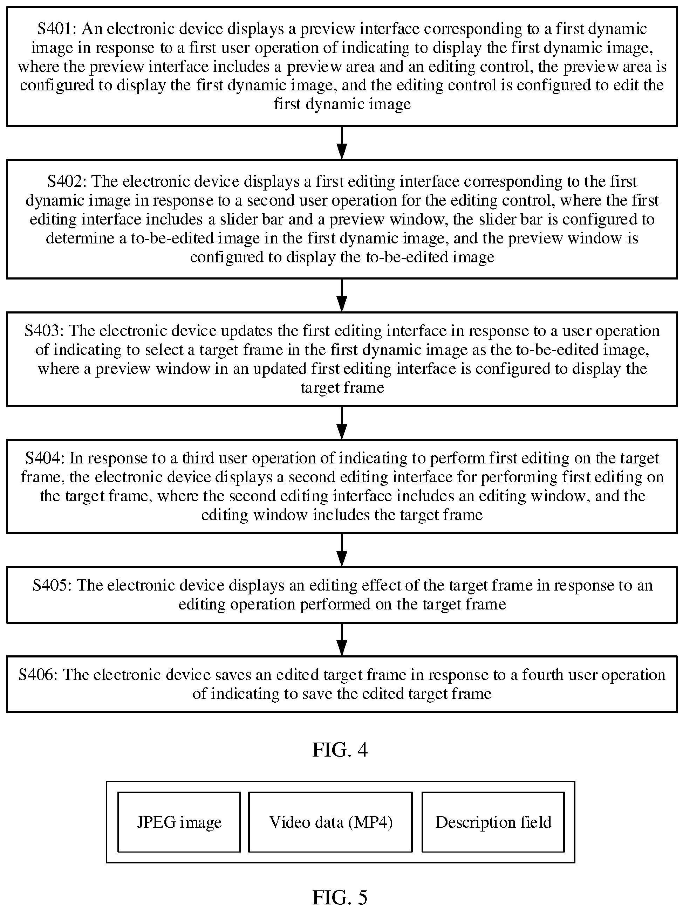

FIG. 4 shows an image processing method according to an embodiment of this application. The method includes some or all of the following steps.

**Step S401: An electronic device displays a preview interface corresponding to a first dynamic image in response to a first user operation of indicating to display the first dynamic image, where the preview interface includes a preview area and an editing control, the preview area is configured to display the first dynamic image, and the editing control is configured to edit the first dynamic image.**

In some embodiments, the electronic device may display an application interface (for example, the user interface 11 shown in FIG. 1A) of a gallery application. The application interface includes a thumbnail (for example, the thumbnail 110 in the user interface 11) of the first dynamic image. When detecting a user operation for the thumbnail, the electronic device displays the preview interface (for example, the user interface 12 shown in FIG. 1B) corresponding to the first dynamic image in response to the user operation. The preview interface includes a preview area (for example, the preview window 121 in the user interface 12) and an editing control (for example, the editing control 122 in the user interface 12). The preview area is configured to display the first dynamic image. The editing control is configured to edit the first dynamic image.

The first dynamic image may be a still image, a dynamic image, a video, or the like.

FIG. 5 is a diagram of a structure of a file format of a dynamic image according to an embodiment of this application. As shown in FIG. 5, the file format of the dynamic image may include three fields. The first field is a JPEG image, and the JPEG field is a cover image of the dynamic image. The second field is video data obtained after mixing is completed, for example, an mp4 file. The third field is a description field (TAG) of the dynamic image. The third field may include three subfields. The first subfield is a version number (version). For example, a current version is a second version, and the version number may be v2. The second subfield includes a start time (start) and duration (duration). To be specific, the second subfield is used to record a playback start time and duration during gallery preview. The start time (start) is a time point in a video at which the first frame is played during gallery preview. The third subfield is used to record a file length of the video data. The file length of the video data may also be referred to as a video byte stream length.

The file length of the video data is used to determine position information of the video in a file. The position information may include a start position and an end position. A video offset is a sum of a length of the second field (that is, the file length of the video data) and a length of the third field. The start position of the video in the file may be determined based on the video offset. The end position of the video in the file may be determined based on the video offset and the video byte stream length.

**Step S402: The electronic device displays a first editing interface corresponding to the first dynamic image in response to a second user operation for the editing control, where the first editing interface includes a slider bar and a preview window, the slider bar is configured to determine a to-be-edited image in the first dynamic image, and the preview window is configured to display the to-be-edited image.**

The first editing interface is configured to process the first dynamic image. The processing includes updating a cover image of the first dynamic image, editing any frame of still image in the first dynamic image, or the like.

In some embodiments, when detecting the second user operation, the electronic device displays the first editing interface in an initial state. The to-be-edited image in the first editing interface in the initial state may be a frame in the first dynamic image, may be the cover image, or may be a preset frame. For example, the preview window in the first editing interface in the initial state displays the cover image of the first dynamic image, and the cover image is also in the slider bar of the first editing interface in the initial state.

Optionally, the editing interface corresponding to the first dynamic image may further include at least one editing option and another control. The at least one editing option includes a first editing option. The first editing option is configured to perform first editing on an image in a selected state. The first editing may be graffitiing, cropping, filtering, watermarking, and the like.

For example, for the editing interface corresponding to the first dynamic image, refer to the user interface 13 shown in FIG. 1C and the user interface 14 shown in FIG. 1D. The user interface 13 is the first editing interface in the initial state. The user interface 14 is the first editing interface after the user reselects the still image in the first dynamic image. For the preview window, refer to related descriptions of the preview window 131. For the slider bar, refer to related descriptions of the slider bar 134. For the at least one editing option, refer to related descriptions of the option bar 135.

In some embodiments, when detecting the second user operation performed on the editing control, the electronic device determines whether an image on a current interface is a dynamic image in response to the user operation, and when determining that the image is the dynamic image, initializes an editing interface corresponding to the dynamic image. It may be understood that, editing interfaces corresponding to the dynamic image and the still image may be different.

In an implementation, a process in which the electronic device initializes the first editing interface corresponding to the first dynamic image may specifically include initializing an interface animation, initializing the slider bar, and initializing a buffer, where the buffer is configured to store data in a process of editing the first dynamic image.

For example, initializing the interface animation by the electronic device may include: (1) executing a cover image moving animation, where the cover image moving animation is an interface change that the preview area in the preview interface is switched to the preview window of the editing interface, an initial position is the preview area in the preview interface, and an end position is the preview window of the editing interface; and for example, the animation is that the cover image of the preview window 121 shown in FIG. 1B moves to the preview window 131 shown in FIG. 1C; and (2) performing callback after executing the animation, and loading a video resource of the first dynamic image. In this case, the preview window of the editing interface has two layers of views. The upper layer is the cover image of the first dynamic image, and the lower layer is a surfaceview (surfaceview), where the surfaceview is configured to display the video resource of the first dynamic image. In this embodiment of this application, a selected image in the slider bar may be different from the cover image, for example, resolutions are different. Therefore, the cover image of the first dynamic image is covered at the upper layer herein, to implement visual consistency.

A specific process in which the electronic device obtains the video resource may include: The electronic device may obtain an address of the first dynamic image in a file system, and further obtains the file of the first dynamic image based on the address; obtains a position of the video in the file from a tag (TAG) at an end of the file; further obtains the video based on the position of the video in the file; and performs associated settings on the video and an encoder, where the associated settings are used to subsequently obtain the still image from the first dynamic image. For example, the encoder may be a MediaMetadataRetriever (MediaMetadataRetriever). The electronic device sets the video to the retriever. The retriever provides a uniform interface, configured to retrieve frames and metadata from an input media file. The electronic device performs associated settings on the video and a MediaPlayer (MediaPlayer), that is, sets the video to the MediaPlayer, where the MediaPlayer is combined with the surfaceview to play the video. The electronic device may use a method of invoking seekTo (seekTo) of the MediaPlayer, to locate a position of the selected still image based on a percentage of a number of the selected still image to a total quantity of video frames; bind the surfaceview with the MediaPlayer; and may further control, by invoking MediaPlayer seekTo, an image displayed in the surfaceview.

For example, initializing the slider bar by the electronic device may include: A basic view of the slider bar is initialized, where the basic view is a custom view, that is, the custom view means that a size of the slider bar, a quantity of images in the slider bar, and the like may be preset; further, the cover image is drawn as a background image of each frame of image in the slider bar; a selection box of the slider bar is drawn, the cover image is drawn in the box, or another effect may be achieved, for example, a size of the selection box is greater than a size of an image position at another position; and a plurality of still images are parsed out from the video after the video is obtained. For example, the electronic device may parse a specified frame in the video by using a MediaExtractor (MediaExtractor) and a decoder (MediaCodec), where a quantity of frames is not limited. For example, one frame is obtained from the video every preset time, to obtain 10 frames of still images. Further, the plurality of still images are updated to the background image of the slider bar. For example, after the video of the first dynamic image in the preview window 121 shown in FIG. 1B is obtained, the plurality of still images of the first dynamic image are obtained, and then the plurality of still images are updated to the slider bar 134 in FIG. 1C by using alpha (alpha animation).

**Step S403: The electronic device updates the first editing interface in response to a user operation of indicating to select a target frame in the first dynamic image as the to-be-edited image, where a preview window in an updated first editing interface is configured to display the target frame.**

In an implementation, when detecting a sliding operation of the user on the slider bar, the electronic device may set the cover image of the dynamic image of the preview window to be invisible, and displays the surfaceview at the lower layer. A sliding position is displayed on the slider bar by using the selection box. When a user operation of sliding to the target frame is detected, the selection box is displayed on the target frame. A percentage of the selection box on the slider bar is calculated. A time point of the target frame in the video is calculated based on the percentage. Further, the seekTo method of the MediaPlayer of the MediaPlayer is invoked to adjust display content of the MediaPlayer to a position corresponding to the time point in the video, so that the surfaceview is updated to the target frame corresponding to the time point, where the surfaceview is configured to carry the display content of the MediaPlayer.

For example, the target frame is a first still image corresponding to the thumbnail 134b shown in FIG. 1C. When detecting a user operation of sliding to the thumbnail 134b of the first still image, the electronic device displays the user interface 14 shown in FIG. 1D in response to the user operation, where the image of the surfaceview in the preview window 141 in the user interface 14 is the target frame, that is, the first still image.

Further, based on the updated first editing image, in some embodiments, the electronic device may update the cover image of the first dynamic image to the target frame in response to a user operation of indicating to set the target frame to the cover image of the first dynamic image, to obtain a second dynamic image. For example, when detecting a user operation for the set-to-cover control 132 in the user interface 14 shown in FIG. 1D, the electronic device may set the to-be-edited image displayed in the preview window 141 in the interface to the cover image of the first dynamic image, to obtain the second dynamic image.

In an implementation, when detecting the user operation of setting the target frame to the cover image, the electronic device may pop up a loading box on the user interface, where the loading box indicates that the image is being set to the cover image currently. Optionally, the electronic device may set to skip responding to any user operation in the process of displaying the loading box. To be specific, the user cannot perform another operation. In a process of displaying the loading box, the electronic device may set the target frame to the cover image of the first dynamic image.

For example, the execution process may specifically include: (1) first, obtaining a position percentage of the thumbnail of the target frame in the current interface (for example, the updated first editing interface) on the slider bar; obtaining video duration of the video corresponding to the first dynamic image by using the MediaMetadataRetriever, and further calculating a progress of the target frame in the video based on the foregoing position percentage; and obtaining a bitmap (Bitmap) corresponding to the progress from the video by using a search method (.getScaledFrameAtTime) of the MediaMetadataRetriever, and scaling the bitmap to a resolution the same as that of the cover image of the first dynamic image, to obtain a target cover image corresponding to the second dynamic image; (2) obtaining the file corresponding to the first dynamic image based on a path of the first dynamic image, which may be specifically obtaining data of the video in the first dynamic image and TAG data at an end of the file; (3) obtaining an original exchangeable image file (exchangeable image file, Exif) of the first dynamic image; and modifying an image update time in the original Exif to a current time, to obtain a target Exif corresponding to the second dynamic image; (4) obtaining original database information (ContentValues) of the first dynamic image; (5) deleting data related to the first dynamic image from a database based on the file path, which may specifically include deleting the data related to the first dynamic image from MediaLibrary (MediaLibrary) data, deleting the data related to the first dynamic image from the database (MediaProvider), and deleting the file corresponding to the first dynamic image; (6) creating a file of the second dynamic image, which may specifically include creating the file based on an absolute path of the first dynamic image; opening the file; writing the target Exif into the file (that is, writing into the file); compressing the target cover image in a jpeg form and writing it into the file; adding the data of the video in the first dynamic image and the TAG data at the end of the file corresponding to the first dynamic image to an end of the file; closing the file; updating cover image number data at the end of the picture file; updating the ContentValues, where the ContentValues may include attributes such as time and date, and whether adding-to-favorites is performed; inserting data related to the second dynamic image into the database, for example, inserting basic information such as a storage path, a creation time, an update time, and a file size of the second dynamic image into the MediaProvider database and inserting the foregoing basic information and information such as a special file type of the second dynamic image into the MediaLibrary database, where the special file type includes a dynamic image, high dynamic range imaging (High Dynamic Range Imaging, HDR), and the like; (7) triggering to display a preview interface corresponding to the second dynamic image and data refreshing of a grid interface (for example, the user interface 11 shown in FIG. 1A) in the gallery; and (8) re-initializing the MediaMetadataRetriever, the MediaPlayer, and the surfaceview because the file of the first dynamic image is deleted.

The Exif of the image may include a camera brand, a mobile phone model, a flash, a shutter speed, an aperture size, photo-sensitivity, GPS coordinates, and other information. This is not limited in embodiments of this application. The database information of the image may include a storage path, a creation time, an update time, a special file type, a file size, and other information of the image.

In some other embodiments, the user may select the target frame as the to-be-edited image by using the slider bar, and then save the target frame as a still image for saving. Correspondingly, the electronic device may save the target frame as a still image for saving in response to an operation of saving the target frame.

For example, assuming that the first still image corresponding to the thumbnail 134b shown in FIG. 1C is the target frame, when detecting the user operation of sliding to the thumbnail 134b of the first still image, the electronic device may determine the first still image as the to-be-edited image in response to the user operation, and display the editing interface corresponding to the first still image, for example, the user interface 14 shown in FIG. 1D. Then, the electronic device may save the first still image in response to a user operation for the save-as control 133 in the user interface 14.

In an implementation, the electronic device may pop up the loading box on the updated first editing interface, where the loading box indicates that the target frame is being saved. Optionally, the electronic device may set to skip responding to any user operation in the process of displaying the loading box. To be specific, the user cannot perform another operation. In a process of displaying the loading box, the electronic device may save the target frame.

For example, a process in which the electronic device saves the target frame may specifically include: (1) first, obtaining the position percentage of the thumbnail of the target frame in the current interface (for example, the updated first editing interface) on the slider bar; obtaining the video duration of the video corresponding to the first dynamic image by using the MediaMetadataRetriever, and further calculating the progress of the target frame in the video based on the foregoing position percentage; and obtaining the bitmap corresponding to the progress from the video by using the search method (.getScaledFrameAtTime) of the MediaMetadataRetriever, where the bitmap may be scaled to an image with a resolution the same as that of the cover image of the first dynamic image, to obtain a target frame with a high resolution; (2) obtaining the original exchangeable image file (exchangeable image file, Exif) of the first dynamic image; and modifying the image update time in the original Exif to the current time, to obtain the target Exif corresponding to the target frame; (3) determining the absolute path of the target frame, for example, setting a parent path of the first dynamic image to a parent path of saving as a picture, and setting the current time to a name of the target frame, to obtain the absolute path of the target frame; (4) creating a file of the target frame based on the absolute path, and opening the file; writing the target Exif into the file, compressing the target frame with the high resolution in a jpeg form, and writing a compressed image into the file; and closing the file; (5) obtaining the database information (ContentValues) of the first dynamic data, updating time and date in the ContentValues to the current time, and updating the file path in the ContentValues to the absolute path, to obtain ContentValues of the target frame with the high resolution; (6) inserting the ContentValues of the target frame with the high resolution into the database, which may specifically include inserting the basic information such as the storage path, the creation time, the update time, and the file size of the target frame with the high resolution into the MediaProvider database and inserting the foregoing basic information and information such as the special file type of the target frame with the high resolution into the MediaLibrary database; and (7) triggering to display a preview interface corresponding to the target frame with the high resolution and data refreshing of the grid interface (for example, the user interface 11 shown in FIG. 1A) in the gallery.

**Step S404: In response to a third user operation of indicating to perform first editing on the target frame, the electronic device displays a second editing interface for performing first editing on the target frame, where the second editing interface includes an editing window, and the editing window includes the target frame.**

The first editing may be editing operations such as graffitiing, cropping, filtering, and watermarking. The second editing interface includes function controls corresponding to the first editing, for example, a function control corresponding to graffitiing and a function control corresponding to filtering. The editing window is configured to display an editing process in which the user performs first editing on the target frame.

In some embodiments, the updated first editing interface includes an editing option corresponding to the first editing. When detecting a user operation for the editing option, the electronic device displays the second editing interface.

For example, assuming that the target frame is the first still image corresponding to the thumbnail 134b in the user interface 14 shown in FIG. 2A, the user interface 14 includes the preview window 141, and also includes a plurality of editing options, for example, the graffiti option 135c. Assuming that the editing option corresponding to the first editing is the graffiti option 135c, when detecting a user operation for the graffiti option 135c, the electronic device may display an editing interface for making graffiti on the first still image, for example, the user interface 21 shown in FIG. 2B. The first still image is displayed in the editing window 211 in the user interface 21.

Optionally, the target frame displayed in the preview window in the second editing interface may be obtained from a screenshot in the updated first editing interface. In this embodiment of this application, a display speed of the second editing interface may be improved based on the screenshot.

For example, when detecting the third user operation performed on the updated first editing interface, the electronic device obtains a position percentage of the selected still image in the updated first editing interface in the slider bar; obtains a screenshot of a surfaceview area by using a screenshot taking tool (for example, a pixelCopy) based on the position percentage, where a speed at which the pixelCopy obtains the screenshot based on the surfaceview may reach an ms level, greatly improving the display speed of the second editing interface; and further updates the obtained screenshot to the editing window of the second editing interface.

**Step S405: The electronic device displays an editing effect of the target frame in response to an editing operation performed on the target frame.**

The editing operation performed on the target frame may be one or more editing operations. This is not limited in this embodiment of this application. The editing effect of the target frame is display content at a position of the target frame. For example, the editing effect of the target frame during graffiti editing is a target frame with a graffiti track. For another example, the editing effect of the target frame during cropping editing is a target frame whose size, content, and the like change after the target frame is cropped.

It should be noted that, in this embodiment of this application, the target frame displayed in the editing window may also be referred to a fourth still image. The editing operation performed on the target frame is a user operation performed on the fourth still image. Displaying the editing effect of the target frame is displaying the editing effect of the fourth still image.

For example, assuming that the editing operation is adding graffiti, the electronic device may add graffiti to the target frame in response to the editing operation, and add scaled-down graffiti to the thumbnail corresponding to the target frame. Refer to FIG. 2B and FIG. 2C.

**Step S406: The electronic device saves an edited target frame in response to a fourth user operation of indicating to save the edited target frame.**

In an implementation, when detecting the fourth user operation, the electronic device may obtain the target frame with the high resolution in response to the user operation; superpose the editing effect to the target frame, to obtain the edited target frame; and save the edited target frame. In this embodiment of this application, the edited target frame saved by the electronic device may also be referred to as a target image.

For example, the electronic device may first obtain the position percentage of the thumbnail of the target frame in the slider bar; further obtain a bitmap of a current video progress by using a MediaMetadataRetriever search method (.getScaledFrameAtTime) based on the position percentage; scale the bitmap to a resolution the same as that of the cover image (or another resolution), to obtain an original target frame to which no editing effect is superposed, and superpose an editing effect of the second editing interface to the original target frame, to obtain an edited target frame; obtain the original Exif of the dynamic image (that is, the first dynamic image) corresponding to the target frame, where the original Exif includes but is not limited to the following information: time information (for example, a shooting time or an update time), a shooting parameter, and the like; update the time information in the original Exif based on the current time, to obtain the target Exif, where time information in the target Exif includes time information in which the update time is the current time; determine the absolute path of the target frame, for example, set the parent path of the first dynamic image to the parent path of the target frame, and set the current time to the name of the target frame, to obtain the absolute path of the target frame; and create, based on the absolute path, the file and open read and write files corresponding to the file, write the target Exif into the file, compress the edited target frame in the jpeg form, write the compressed image into the file, and close the file.

In some other embodiments of this application, after editing the target frame on the second editing interface, the user may trigger to return to the first editing interface (a trigger operation shown in the user interface 22 shown in FIG. 2C). The preview window (for example, the preview window 231) in the first editing interface (for example, the user interface 23 shown in FIG. 2D) to which the user returns displays the edited target frame. The thumbnail of the edited target frame is in the selection box in the slider bar (for example, the slider bar 232), and another area in the slider bar other than the selection box is in a greyed-out state, where the greyed-out state may be displayed as grey and is non-triggerable.

Further, assuming that the user triggers the first editing interface to start resetting, in response to a resetting operation performed on the first editing interface (for example, tapping the resetting control 132 in the user interface shown in FIG. 2D), the electronic device may delete the editing effect superposed to the target frame, and display the first editing interface in the initial state (for example, the user interface 13 shown in FIG. 1C). Specifically, the electronic device may first delete the editing effect of the target frame in the preview window of the first editing interface and the editing effect of the thumbnail of the target frame on the slider bar; initialize display content of the MediaPlayer and the surfaceview; seekTo the MediaPlayer to a position of the cover image; update the preview window of the first editing interface to the cover image; and cancel greying-out of the slider bar, and set a progress of the slider bar to a position of the thumbnail of the cover image.

**Next, the following describes a form, a software architecture, and a hardware architecture of the electronic device provided in embodiments of this application.**

The electronic device may be a portable terminal device equipped with iOS^{®}, Android^{®}, Microsoft^{®}, or another operating system, such as a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an onboard device, a smart home device, and/or a smart city device.

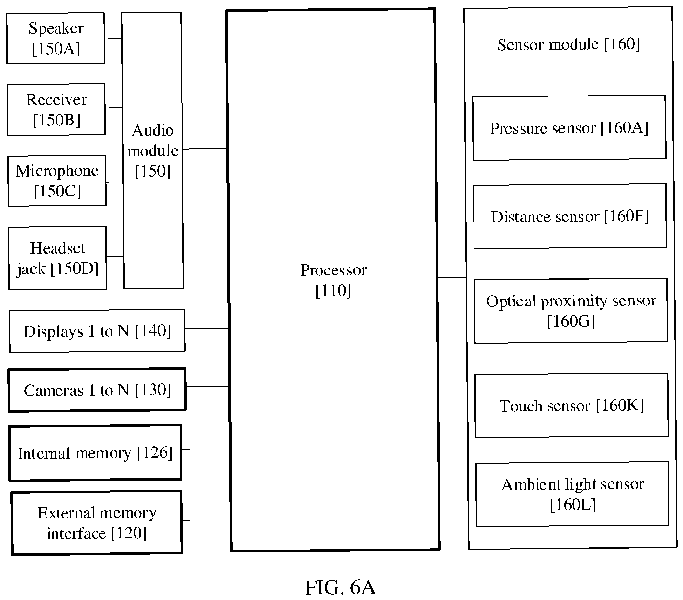

**FIG. 6A** **is an example of a hardware structure of an electronic device according to an embodiment of this application**. As shown in FIG. 6A, the electronic device 100 may include: a processor 110, an external memory interface 120, an internal memory 126, a camera 130, a display 140, an audio module 150, a speaker 150A, a receiver 150B, a microphone 150C, a headset jack 150D, and a sensor module 160. The sensor module 160 may include a pressure sensor 160A, a distance sensor 160F, an optical proximity sensor 160G, a touch sensor 160K, an ambient light sensor 160L, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated in one or more processors.

The controller may be a nerve center and a command center of the electronic device. The controller may generate an operation control signal based on instruction operation code and a timing signal, to control instruction fetching and instruction execution.

A memory may be further disposed in the processor 110, and is configured to store instructions and data. In some embodiments, the memory in the processor 110 is a cache memory. The memory may store instructions or data that has just been used or cyclically used by the processor 110. If the processor 110 needs to use the instructions or the data again, the processor 110 may directly invoke the instructions or the data from the memory. This avoids repeated access, reduces waiting time of the processor 110, and therefore improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface.

In embodiments of this application, the processor 110 may be configured to run the gallery application. The processor 110 is configured to control various modules in the galley application to perform the editing function in the foregoing embodiments of FIG. 1A to FIG. 1D, FIG. 2A to FIG. 2K, and FIG. 3A to FIG. 3C, thereby implementing the image processing method provided in this application.

It may be understood that, an interface connection relationship between the modules shown in embodiments of this application is merely an example for description, and does not constitute a structural limitation on the electronic device. In some other embodiments of this application, the electronic device may alternatively use an interface connection manner different from that in the foregoing embodiment, or a combination of a plurality of interface connection manners.

The internal memory 126 may include one or more random access memories (random access memory, RAM), and one or more non-volatile memories (non-volatile memory, NVM).

The random access memories may include a static random-access memory (static random-access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth generation DDR SDRAM, generally referred to as DDR5 SDRAM), and the like.

The non-volatile memories may include a disk storage device and a flash memory (flash memory).

The flash memory may be divided into NOR FLASH, NAND FLASH, 3D NAND FLASH, and the like according to an operation principle, or may be divided into a single-level cell (single-level cell, SLC), a multi-level cell (multi-level cell, MLC), a triple-level cell (triple-level cell, TLC), a quad-level cell (quad-level cell, QLC), and the like according to a quantity of voltage levels per cell, or may be divided into a universal flash storage (universal flash storage, UFS), an embedded multimedia card (embedded multi media Card, eMMC), and the like according to a storage specification.

The random access memory may be directly read and written by the processor 110, may be configured to store executable programs (for example, machine instructions) of an operating system or another running program, and may be configured to store data of a user and an application, and the like.

The non-volatile memory may also store executable programs, data of the user and the application, and the like, and may be loaded into the random access memory in advance, to be directly read and written by the processor 110.

The external memory interface 120 may be configured to connect to an external non-volatile memory, to expand a storage capability of the electronic device. The external non-volatile memory communicates with the processor 110 through the external memory interface 120, to implement a data storage function. For example, files such as music and videos are stored in the external non-volatile memory.

The electronic device implements a display function by using the GPU, the display 140, the application processor, and the like. The GPU is a microprocessor for image processing, and is connected to the display 140 and the application processor. The GPU is configured to perform mathematical and geometric computing for graphics rendering. The processor 110 may include one or more GPUs, and the GPU executes a program instruction to generate or change display information.

The display 140 is configured to display an image, a video, and the like. The display 140 includes a display panel. The display panel may use a liquid crystal display (liquid crystal display, LCD). The display panel may alternatively be manufactured by using an organic light-emitting diode (organic light-emitting diode, OLED), an active-matrix organic light-emitting diode (active-matrix organic light-emitting diode, AMOLED), a flex light-emitting diode (flex light-emitting diode, FLED), a miniled, a microLed, micro-oled, a quantum dot light emitting diode (quantum dot light emitting diodes, QLED), or the like. In some embodiments, the electronic device may include 1 or N displays 140. N is a positive integer greater than 1.

The electronic device may implement a shooting function by using the ISP, the camera 130, the video codec, the GPU, the display 140, the application processor, and the like.

The ISP is configured to process data fed back by the camera 130. For example, when photographing is performed, a shutter is opened, light is transmitted to a camera photosensitive element through a lens, an optical signal is converted into an electrical signal, and the camera photosensitive element transmits the electrical signal to the ISP for processing, and the electrical signal is converted into an image visible to naked eyes. The ISP may further perform algorithm optimization on noise and brightness of the image. The ISP may further optimize parameters such as exposure and a color temperature of a shooting scenario. In some embodiments, the ISP may be disposed in the camera 130.

The camera 130 is configured to capture a still image or a video. An optical image is generated for an object through the lens and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device may include 1 or N cameras 130. N is a positive integer greater than 1.

In embodiments of this application, the camera 130 may be a long-focus camera, a primary camera, a wide-angle camera, or the like.

The digital signal processor is configured to process a digital signal, and may further process another digital signal in addition to the digital image signal. For example, when the electronic device performs frequency selection, the digital signal processor is configured to perform Fourier transform on frequency energy.

The video codec is configured to compress or decompress a digital video. The electronic device may support one or more video codecs. In this way, the electronic device may play or record videos in a plurality of encoding formats, for example, moving picture experts group (moving picture experts group, MPEG) 1, MPEG 2, MPEG 3, and MPEG 4.

The NPU is a neural-network (neural-network, NN) computing processor. By drawing on a structure of a biological neural network, for example, by drawing on a transmission mode between human brain neurons, the NPU quickly processes input information, and may further continuously perform self-learning. An application such as intelligent cognition, for example, image recognition, face recognition, speech recognition, or text understanding of the electronic device may be implemented by using the NPU.

The electronic device may implement an audio function by using the audio module 150, the speaker 150A, the receiver 150B, the microphone 150C, the headset jack 150D, the application processor, and the like, for example, music playing or sound recording.

The audio module 150 is configured to convert digital audio information into an analog audio signal for output, and is also configured to convert an analog audio input into a digital audio signal. The audio module 150 may be further configured to encode and decode an audio signal. In some embodiments, the audio module 150 may be disposed in the processor 110, or some functional modules of the audio module 150 are disposed in the processor 110.

The speaker 150A, also referred to as a "loudspeaker", is configured to convert an audio electrical signal into a sound signal. The electronic device may listen to music or answer a call in a hands-free mode by using the speaker 150A.

The receiver 150B, also referred to as an "earpiece", is configured to convert an electrical audio signal into a sound signal. When the electronic device answers a call or receives a voice message, the receiver 150B may be placed close to a human ear to receive voice.

The microphone 150C, also referred to as a "mike" or a "mic", is configured to convert a sound signal into an electrical signal. When making a call or sending a voice message, a user may make a sound by approaching the mouth to the microphone 150C, to input a sound signal to the microphone 150C. The electronic device may be provided with at least one microphone 150C. In some other embodiments, the electronic device may be provided with two microphones 150C, to implement a noise reduction function in addition to collecting sound signals. In some other embodiments, the electronic device may alternatively be provided with three, four, or more microphones 150C to collect the sound signals, reduce noise, and identify sound sources to implement a directional recording function, and the like.

The headset jack 150D is configured to connect to a wired headset. The headset jack 150D may be a USB interface, or may be a 3.5 mm open mobile terminal platform (open mobile terminal platform, OMTP) standard interface or a cellular telecommunications industry association of the USA (cellular telecommunications industry association of the USA, CTIA) standard interface.

The structure shown in embodiments of this application does not constitute a specific limitation on the electronic device. In some other embodiments of this application, the electronic device may include more or fewer components than those shown in the figure, or combine some components, or split some components, or have different component arrangements. The components shown in the figure may be implemented by hardware, software, or a combination of software and hardware. For example, the electronic device may further include a button, a motor, an indicator, and a subscriber identity module (subscriber identification module, SIM) card interface, and the like. For another example, the sensor module may further include: a gyroscope sensor, a barometric pressure sensor, a magnetic sensor, an acceleration sensor, a fingerprint sensor, a temperature sensor, a bone conduction sensor, and the like.

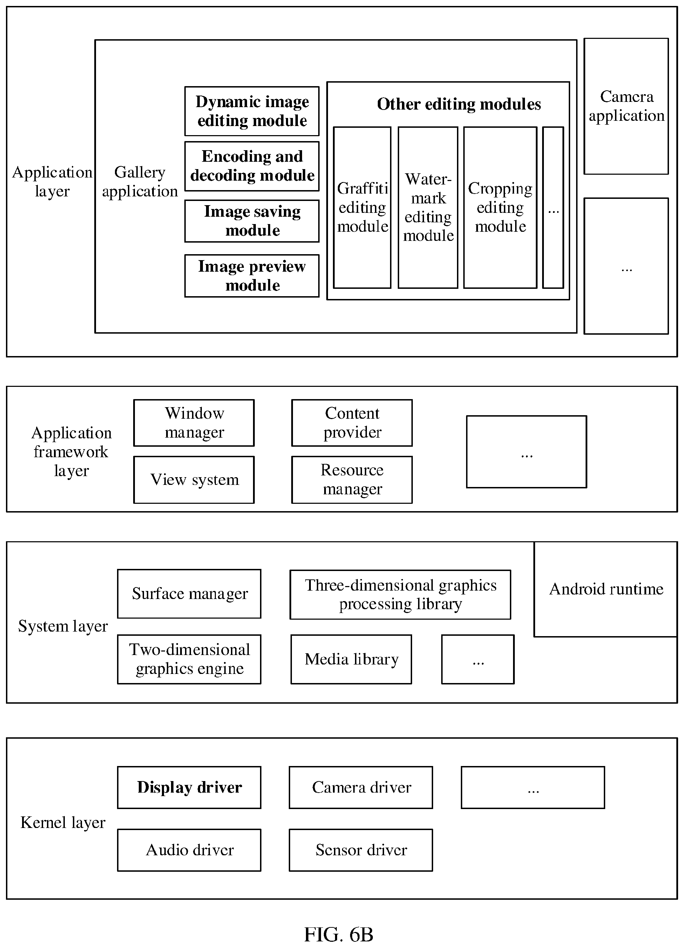

**FIG. 6B** **is an example of a software architecture of an electronic device according to an embodiment of this application.**

As shown in FIG. 6B, a layered architecture divides a system into several layers, and each layer has a clear role and task. The layers communicate with each other through software interfaces. In some embodiments, the system is divided into four layers: an application layer, an application framework layer (framework), a system layer, and a kernel layer from top to bottom.

The application layer (application) may include a series of application packages. For example, an application package may include applications such as a gallery application and a camera application.

The gallery application may include but is not limited to: an image preview module, a dynamic image editing module, an encoding and decoding module, another editing module, an image storage module, an image buffering module (not shown), and the like.

The image preview module is mainly responsible for human-computer interaction of the gallery application, for example, controlling display of a galley display interface (for example, the following preview interface) and a preview picture in the interface, and sensing and responding to a user operation that occurs in the preview interface.

The dynamic image editing module is configured to: display an editing interface corresponding to a dynamic image (for example, the following first editing interface), and process display content on the editing interface (for example, intercept display content in a preview window). The dynamic image editing module may specifically include a video track management module, where the video track management module is configured to edit a slider bar in an editing interface corresponding to the dynamic image.

The encoding and decoding module is configured to parse out a still image from a video corresponding to the dynamic image.

The another editing module is configured to perform editing processing on the still image in the dynamic image. The another editing module may specifically include a plurality of editing modules, for example, a graffiti editing module, a watermark editing module, and a cropping editing module.

The image saving module is configured to save the still image in the dynamic image as an independent still image. It should be noted that, the still image that is in the dynamic image and that is saved by the image saving module may be unedited, or may be a still image obtained through editing by the another editing module.

The image buffering module is a functional module shared by other modules outside the gallery, and is configured to manage buffer of an image and storage of an editing effect (graffitiing, cropping, and the like) and an editing effect.

The application framework layer (framework) may mainly relate to a camera framework, which may include camera access interfaces such as camera management and a camera device, implement a function of a connecting link, and may interact with a camera application by using an application programming interface (application program interface, API), and may interact with a HAL by using an HAL interface definition language (HAL interface definition language, HIDL).

The software architecture may further include a hardware abstract layer (hardware abstract layer, HAL) not shown in FIG. 6B. The hardware abstract layer is an interface layer located between the application framework layer and the kernel layer, and provides a virtual hardware platform for the operating system.

The kernel layer is a layer between hardware and software. The kernel layer includes various drivers of hardware, such as a display driver, a camera driver, an audio driver, and a sensor driver. The kernel layer may further include a digital signal processor driver (not shown), an image processor driver (not shown), and the like. The camera driver is configured to: drive an image sensor of one or more cameras in a camera module to capture an image, and drive the image signal processor to pre-process the image. The digital signal processor driver is configured to drive the digital signal processor to process the image. The image processor driver is configured to drive the graphics processing unit to process the image.

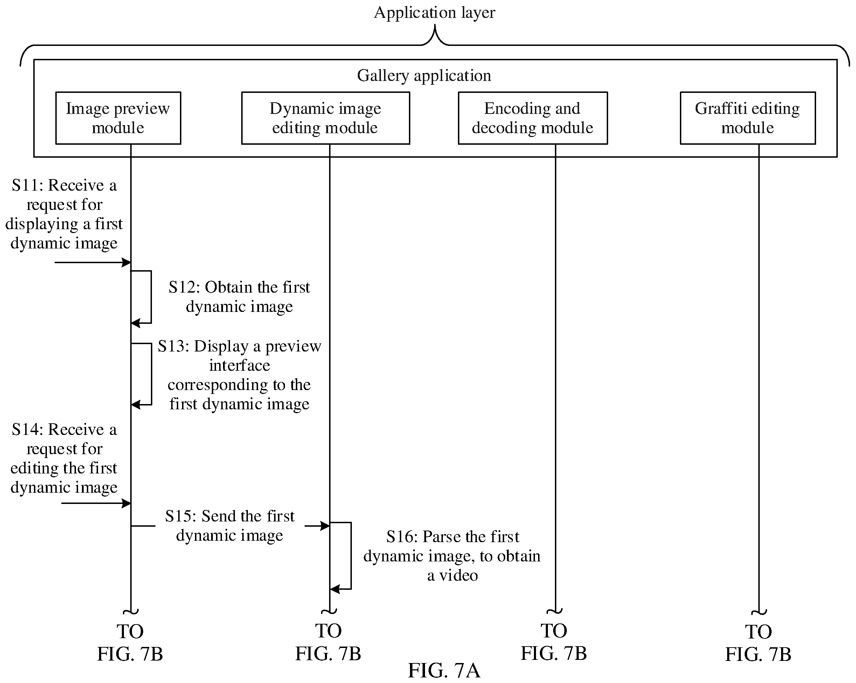

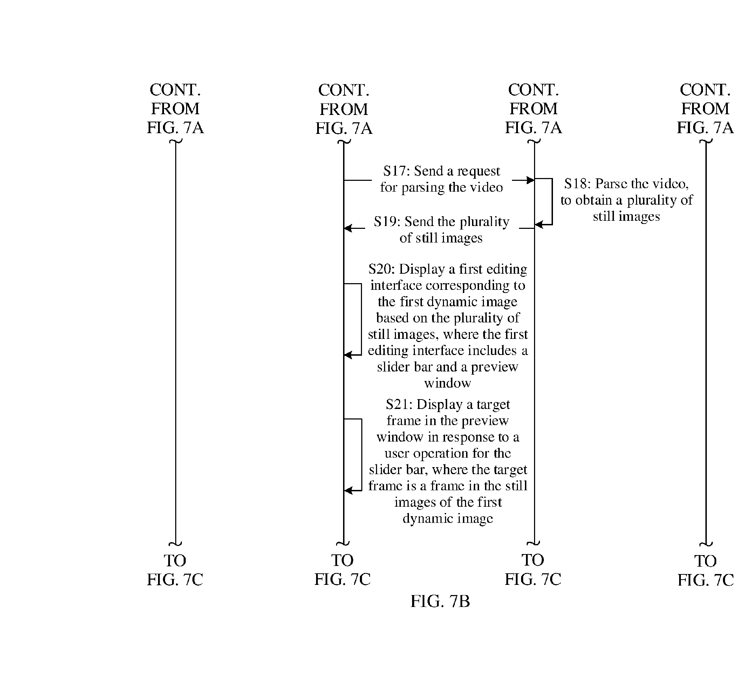

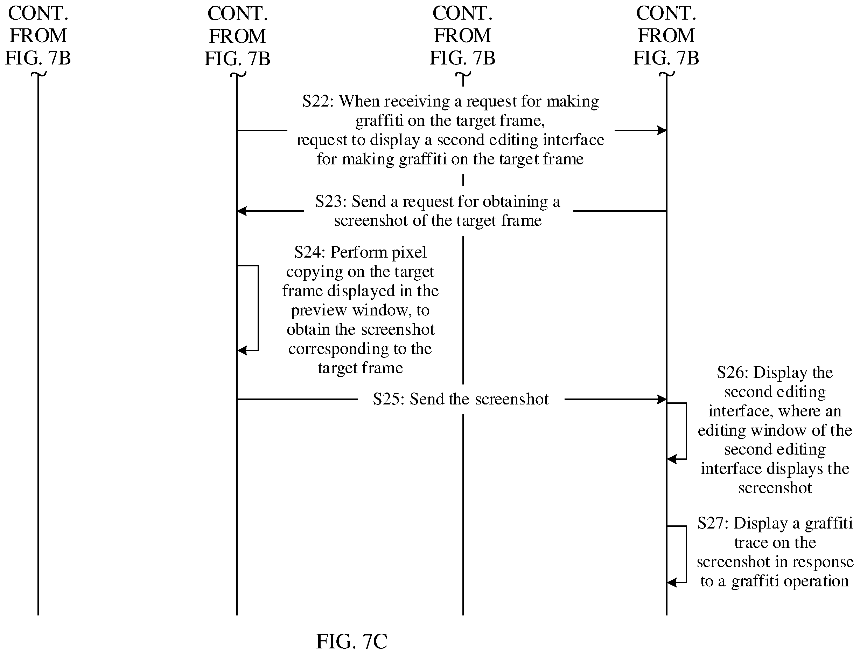

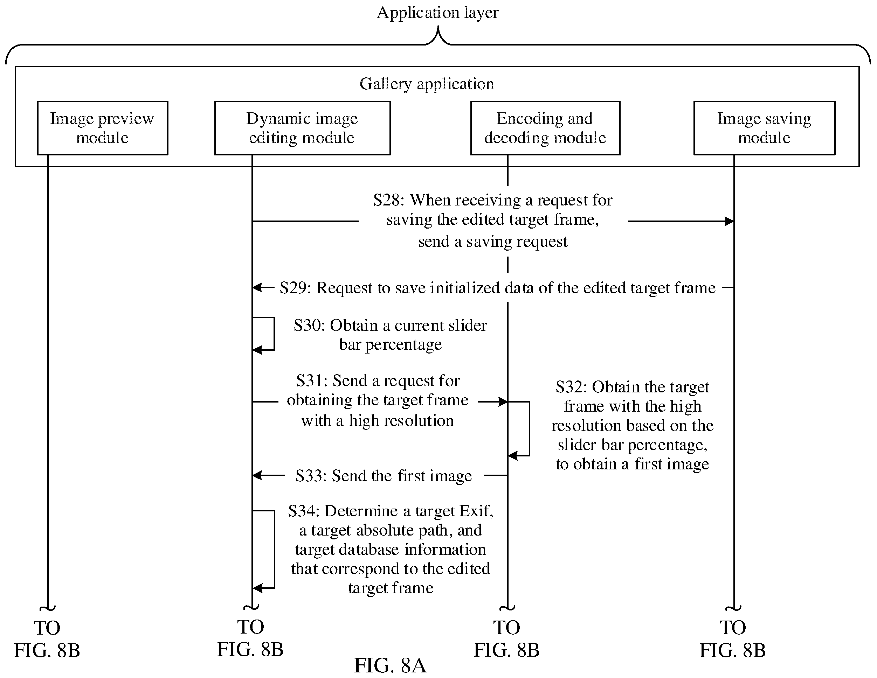

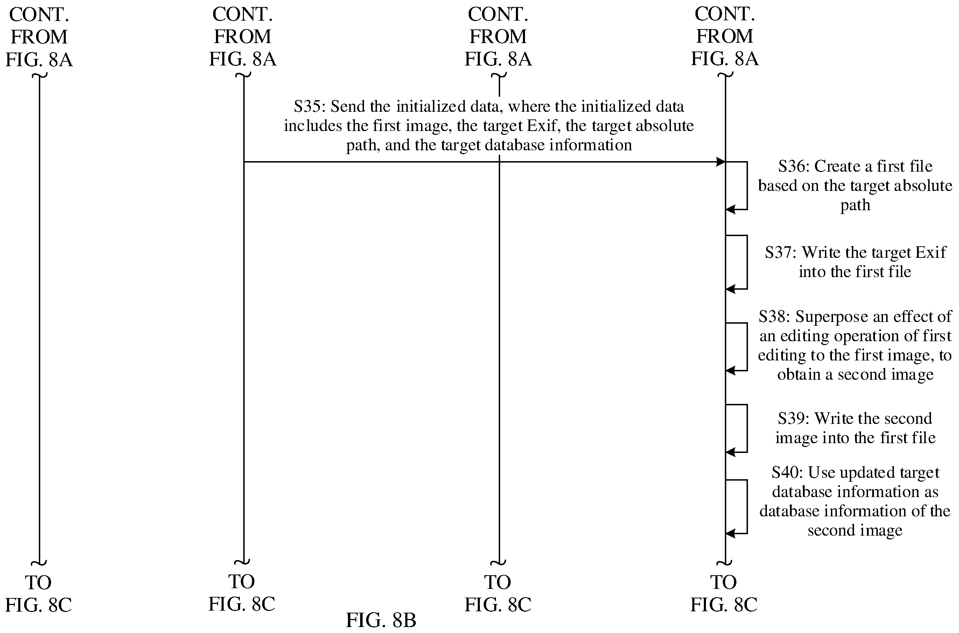

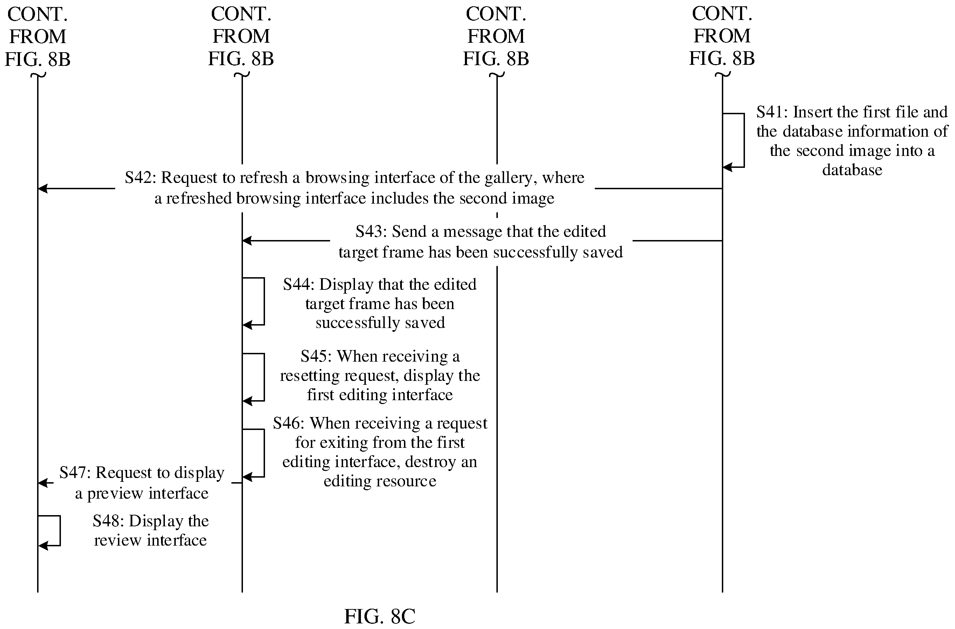

**Based on the software architecture and hardware architecture of the electronic device, the following respectively describes, deep into the architectures with reference to** **FIG. 7A****,** **FIG. 7B****, and** **FIG. 7C****, and** **FIG. 8A****,** **FIG. 8B****, and** **FIG. 8C****, image processing methods according to embodiments of this application.**

FIG. 7A, FIG. 7B, and FIG. 7C show an image processing method for editing a still image in a dynamic image by an electronic device according to an embodiment of this application. The method includes some or all of the following steps.

S11: An image preview module receives a request for displaying a first dynamic image.

In some embodiments, a user may trigger the electronic device to start a gallery application, and further trigger the electronic device to display an image of the gallery application. The image of the gallery application may include a dynamic image, a still image, a video, and the like. Assuming that the user triggers to display the first dynamic image, as shown in FIG. 1A, the user may tap the thumbnail 110 of the first dynamic image displayed in the user interface 11, and correspondingly, the image preview module of the electronic device may receive the request for displaying the first dynamic image.

It may be understood that, the user may alternatively trigger, in a manner such as voice or gesture, to display the first dynamic image. A specific manner in which the user triggers the electronic device to display the first dynamic image is not limited in this application.

S12: The image preview module obtains the first dynamic image.

In some embodiments, after receiving the request for displaying the first dynamic image, the image preview module obtains display data of the first dynamic image from a media library. For example, a file format of the first dynamic image obtained by the image preview module may be shown in FIG. 5. Further, the image preview module obtains, from the first dynamic image based on a third field of the first dynamic image, a first field (that is, a cover image corresponding to the first dynamic image) and a second field (that is, a video corresponding to the first dynamic image), where display data of the first dynamic image may be the first field and the second field in the first dynamic image.

S13: The image preview module displays a preview interface corresponding to the first dynamic image.

In some embodiments, after obtaining the display data of the first dynamic image, the gallery preview module displays the preview interface corresponding to the first dynamic image based on the display data. The preview interface includes a preview area, where the preview area is used to display the first dynamic image. The preview interface corresponding to the first dynamic image may further include another control. For specific content of the preview interface, refer to the foregoing related descriptions. As shown in FIG. 1A, the user may tap the thumbnail 110 of the first dynamic image displayed in the user interface 11. Correspondingly, after obtaining the first dynamic image, the image preview module of the electronic device may display the user interface 12 shown in FIG. 1B. The preview window 121 in the user interface 12 may display the cover image of the first dynamic image, and when the user long presses the preview window 121, the video of the first dynamic image is played.

S14: The image preview module receives a request for editing the first dynamic image.

For example, the preview interface corresponding to the first dynamic image includes an editing control, where the editing control is configured to edit the first dynamic image. The user taps the editing control. Correspondingly, the preview module of the electronic device may receive the request for editing the first dynamic image.

For example, the preview interface corresponding to the first dynamic image is shown in FIG. 1B. The user may tap the editing control 122 displayed in the user interface 12 shown in FIG. 1B. Correspondingly, the image preview module of the electronic device receives the request for editing the first dynamic image.

S15: The image preview module may send a display request to a dynamic image editing module, where the display request is used to request to display a first editing interface corresponding to the first dynamic image, and the request includes the first dynamic image.

The request may further include database information of the first dynamic image. The database information includes attributes (information such as a storage path, a file size, a creation time, and an update time) of a picture file. The database information of the first dynamic image is used to browse, view, and edit the first dynamic image.

In some embodiments, when receiving a user operation of indicating to display an image, the image preview module may determine whether an image that the user requests to edit is a dynamic image. When the image that the user requests to edit is the dynamic image, the request for displaying the first editing interface corresponding to the image is sent to the dynamic image editing module. When the image that the user requests to edit is not the dynamic image, data of the image is obtained, and the preview interface of the image is displayed based on the obtained data.

S16: The dynamic image editing module parses the first dynamic image to obtain the video.

In an implementation, the file format of the first dynamic image may be shown in FIG. 5. The dynamic image editing module starts to read the first dynamic image from an end. In other words, the dynamic image editing module may first parse an end tag of the third field of the first dynamic image, to obtain a video byte stream length; add the video byte stream length and a length of the third field to obtain a video offset; further, determine a start position of the video in the first dynamic image based on the video offset, and determine an end position of the video in the first dynamic image based on the length of the third field; and parse in the first dynamic image based on the start position and the end position, to obtain the video.

S17: The dynamic image editing module sends a request for parsing the video to an encoding and decoding module.

S18: The encoding and decoding module parses the video, to obtain a plurality of still images.

For example, the encoding and decoding module extracts the plurality of still images from the video based on a preset interval. A quantity of extracted images is not limited herein.

S19: The encoding and decoding module sends the plurality of still images to the dynamic image editing module.

S20: The dynamic image editing module displays the first editing interface corresponding to the first dynamic image based on the plurality of still images, where the first editing interface includes a slider bar and a preview window.

The slider bar is configured to display thumbnails corresponding to the plurality of still images. The slider bar in the first editing interface may display thumbnails corresponding to some or all still images in the plurality of still images.

In an implementation, the dynamic image editing module initializes the slider bar and the preview window of the first editing interface based on the video, where the first editing interface is in an initial state. The slider bar is configured to display a thumbnail of a still image corresponding to the first dynamic image (a thumbnail in a selected state at present may be a thumbnail corresponding to the cover image of the first dynamic image). The preview window is configured to display a still image corresponding to the thumbnail in the selected state in the slider bar 134 (the current preview window may display the cover image of the first dynamic image). For a specific process of initialization, refer to related descriptions in S402, and details are not described herein again.

For example, the first editing interface may be the user interface 13 shown in FIG. 1C. The user interface 13 includes the slider bar 134 and the preview window 131. The slider bar 134 is configured to display the thumbnail of the still image corresponding to the first dynamic image. The thumbnail in the selected state in the slider bar 134 is the thumbnail corresponding to the cover image of the first dynamic image. The preview window is configured to display the cover image of the first dynamic image.

S21: The dynamic image editing module displays a target frame in the preview window in response to a user operation for the slider bar, where the target frame is a frame in the still images of the first dynamic image.

In an implementation, the dynamic image editing module displays the target frame in the preview window in response to the user operation for the slider bar, and updates an image in a selected state in the slider bar from the cover image to the target frame.

For example, as shown in FIG. 1C, the user may select the thumbnail 134b of the first still image from the slider bar 134 of the user interface 13, and the first still image is the target frame. Correspondingly, the electronic device may display the user interface 14 shown in FIG. 1D. The thumbnail of the target frame (that is, the thumbnail 134b of the first still image) in the slider bar 134 in the user interface 14 is in a selected state, and the target frame is displayed in the preview window 141.

S22: When receiving a request for making graffiti on the target frame, the dynamic image editing module requests a graffiti editing module to display a second editing interface for making graffiti on the target frame.

For example, as shown in FIG. 2A, in response to a user operation performed on the graffiti option 135c, the electronic device takes, by using the dynamic image editing module, a screenshot of the target frame displayed in the preview window 141, to obtain the screenshot, and further displays the screenshot on the second editing interface.

It should be understood that, making graffiti is used as an example for performing an operation herein. In another embodiment of this application, the user may alternatively perform editing operations such as cropping, filtering, and watermarking on the target frame. To be specific, the second editing interface includes function controls corresponding to first editing, for example, a function control corresponding to graffitiing and a function control corresponding to filtering. An editing window is configured to display an editing process in which the user performs first editing on the target frame.

S23: The graffiti editing module sends a request for obtaining the screenshot of the target frame to the dynamic image editing module.

S24: The dynamic image editing module performs pixel copying on the target frame displayed in the preview window, to obtain the screenshot corresponding to the target frame. For example, the dynamic image editing module may obtain a screenshot of a surfaceview area in the preview window by using a screenshot taking tool (for example, a pixelCopy), to obtain the screenshot corresponding to the target frame.

In this embodiment of this application, a display speed of the interface may be improved based on the screenshot. A speed at which the pixelCopy obtains the screenshot based on the surfaceview may reach an ms level, greatly improving a speed of displaying an image in the interface.

S25: The dynamic image editing module sends the screenshot to the graffiti editing module.

S26: The graffiti editing module displays the second editing interface, where the editing window of the second editing interface displays the screenshot.

For example, the second editing interface may be the user interface 21 shown in FIG. 2B. The electronic device displays, in the editing window 211 of the user interface 21, the screenshot obtained by the dynamic image editing module from the preview window 141 of FIG. 2A through screenshot taking.

S27: The graffiti editing module displays a graffiti trace on the screenshot in response to a graffiti operation.

In some embodiments, when detecting a user operation performed on the editing window of the second editing interface, the electronic device may display, on the screenshot, the graffiti trace corresponding to the graffiti operation. For example, the second editing interface may be the user interface 21 shown in FIG. 2B. As shown in FIG. 2B, the user may make graffiti on the screenshot displayed in the editing window 211. The graffiti editing module of the electronic device displays, on the screenshot, the graffiti trace (an arrow) shown in FIG. 2C in response to the graffiti operation.

In some other embodiments of this application, after the electronic device displays the graffiti trace on the screenshot, the user may trigger to return to the first editing interface. Correspondingly, the electronic device updates the first editing interface in response to the user operation. The graffiti trace is added to the preview window of the updated first editing interface. The scaled-down graffiti trace is also added to the thumbnail in the selected state in the slider bar. For example, the user operation may be a user operation of tapping the dynamic image home page option 213a shown in FIG. 2C, and the updated first editing interface may be the user interface 23 shown in FIG. 2D.

Further, after editing the still image in the dynamic image, the electronic device may save the edited image. FIG. 8A, FIG. 8B, and FIG. 8C show an image processing method in which an electronic device saves an edited still image according to an embodiment of this application. The method includes some or all of the following steps.

S28: When receiving a request for saving the edited target frame, the dynamic image editing module sends a saving request to an image saving module.

In an implementation, when detecting a user operation performed on the editing window of the second editing interface (for example, the user interface 21 shown in FIG. 2B), the electronic device may edit the target frame, and further display the edited target frame (for example, an image in the editing window 221 shown in FIG. 2C) and a save control (for example, the save control 214 shown in FIG. 2C). The user may tap the save control. Correspondingly, the dynamic image editing module of the electronic device may receive the request for saving the edited target frame.

In another implementation, after the electronic device displays the edited target frame, the user may trigger to return to the first editing interface. Correspondingly, the electronic device updates the first editing interface in response to the user operation. The updated first editing interface (for example, the user interface 23 shown in FIG. 2D) includes the edited target frame and a save control (for example, the save-as control 133 shown in FIG. 2D). Further, the user may tap the save control, and correspondingly, the dynamic image editing module of the electronic device may receive the request for saving the edited target frame.

S29: The dynamic image editing module requests the dynamic image module to save initialized data of the edited target frame.

S30: The dynamic image editing module obtains a current slider bar percentage. The current slider bar percentage is a position percentage of the thumbnail of the target frame in the slider bar.

S31: The dynamic image editing module sends a request for obtaining the target frame with a high resolution to a video decoding module.

In this embodiment of this application, the electronic device may save an image with a high resolution, so that the electronic device can display the image with the high resolution when the user views the saved image, thereby improving user experience.

S32: The video decoding module obtains the target frame with the high resolution based on the slider bar percentage, to obtain a first image.

For example, the video decoding module calculates a timestamp of the target frame based on the slider bar percentage, and further extracts a bitmap corresponding to the timestamp from the video of the first dynamic image based on the timestamp, thereby obtaining the first image.

S33: The video decoding module sends the first image to the dynamic image editing module.

S34: The dynamic image editing module determines a target Exif, a target absolute path, and target database information that correspond to the edited target frame.

For example, the dynamic image editing module may obtain an original Exif of the first dynamic image, and modify an image update time in the original Exif as a current time, to obtain the target Exif; obtain a path of the first dynamic image, and modify a name of the path as current time and date, to obtain the target absolute path; and obtain database information of the first dynamic image, to obtain the target database information.

S35: The dynamic image editing module sends the initialized data to the image saving module, where the initialized data includes the first image, the target Exif, the target absolute path, and the target database information.

S36: The image saving module creates a first file based on the target absolute path.

For example, the image saving module may create the first file based on the target absolute path.

S37: The image saving module writes the target Exif into the first file.

For example, the image saving module opens the first file, and writes the target Exif into the first file.

S38: The image saving module superposes an effect of an editing operation of first editing to the first image, to obtain a second image.

S39: The image saving module writes the second image into the first file.

For example, the image saving module may compress the second image in a jpeg form, and further write a compressed second image into the first file, and closes the file after writing the compressed second image into the file.

S40: The image saving module uses updated target database information as database information of the second image.

In an implementation, the image saving module may update some fields in the database information of the first dynamic image, and uses the updated database information as the database information of the second image, where some updated fields may include time, a hash value, a file size, a special file type, whether adding-to-favorites is performed, and the like. For example, the image saving module may update the time to the current time, update the file size to the file size of the second image, modify the special file type as none, and update favorites as none.

S41: The image saving module inserts the first file and the database information of the second image into a database.

S42: The image saving module requests the image preview module to refresh a browsing interface of the gallery, where a refreshed browsing interface includes the second image.

For example, assuming that the browsing interface of the gallery of the electronic device is the user interface 11 shown in FIG. 1A before the electronic device saves the edited target frame, where the user interface 11 includes the thumbnail 110 of the first dynamic image, after the electronic device saves the edited target frame, the browsing interface of the gallery of the electronic device may be the user interface 28 shown in FIG. 2K, and in comparison with the user interface 11, the thumbnail 280 of the edited target frame is added to the user interface 28.

S43: The image saving module sends, to the dynamic image editing module, a message that the edited target frame has been successfully saved.

S44: The dynamic image editing module displays that the edited target frame has been successfully saved.

For example, the dynamic image editing module may display a prompt box on the current interface, where the prompt box indicates that the edited target frame has been successfully saved.

For example, the electronic device displays the user interface 23 shown in FIG. 2D. When detecting a user operation for the save-as control 133, the electronic device may save, in response to the user operation, the still image on which graffiti is made, and display a user interface 24 shown in FIG. 2E in a saving process. The user interface 24 includes a prompt box 240. The prompt box 240 is configured to prompt that the still image on which graffiti is made is being saved currently. For example, content of the prompt box 240 may be "being saved". After the still image is successfully saved, a user interface 25 shown in FIG. 2F is displayed. The user interface 25 may include a prompt box 250. The prompt box 250 is configured to prompt that the still image on which graffiti is made has been successfully saved. For example, content of the prompt box 250 may be "has been saved to the gallery".

S45: When receiving a resetting request, the dynamic image editing module displays the first editing interface.

For example, the displayed first editing interface is the first editing interface in the initial state.

For example, assuming that the user triggers the first editing interface to start resetting, in response to a resetting operation performed on the first editing interface (for example, tapping the resetting control 132 in the user interface shown in FIG. 2D), the electronic device may delete the editing effect superposed to the target frame, and display the first editing interface in the initial state (for example, the user interface 13 shown in FIG. 1C).

S46: When receiving a request for exiting from the first editing interface, the dynamic image editing module destroys an editing resource.

The editing resource includes buffer data of the editing effect superposed to the target frame.

S47: The dynamic image editing module requests to display the preview interface corresponding to the first dynamic image.

S48: The image preview module displays the preview interface.

For example, after resetting the first editing interface, the user taps the return control, and the image preview module displays the preview interface of the first dynamic image. Assuming the reset first editing interface is the user interface 13 shown in FIG. 1C, when receiving a user operation for the return control 136, the electronic device may display the user interface 12 shown in FIG. 1B, where the user interface 12 is the preview interface corresponding to the first dynamic image.

### (II) Saving part

Embodiments of this application provide an image processing method, to improve efficiency of saving a still image in a dynamic image.

In embodiments of this application, an electronic device may display a first editing interface corresponding to the dynamic image. A user may select a target frame from the first editing interface, and trigger to save the target frame. Correspondingly, the electronic device saves the target frame as the still image in response to a user operation of saving the target frame in the dynamic image. In this method, the user may select any frame of still image in the dynamic image for independent saving, and user operation is little, so that user experience can be improved.

In some embodiments, after enabling an editing function for one frame of still image in the dynamic image (in the manner shown in FIG. 1A to FIG. 1D or another manner), the electronic device may save the still image.

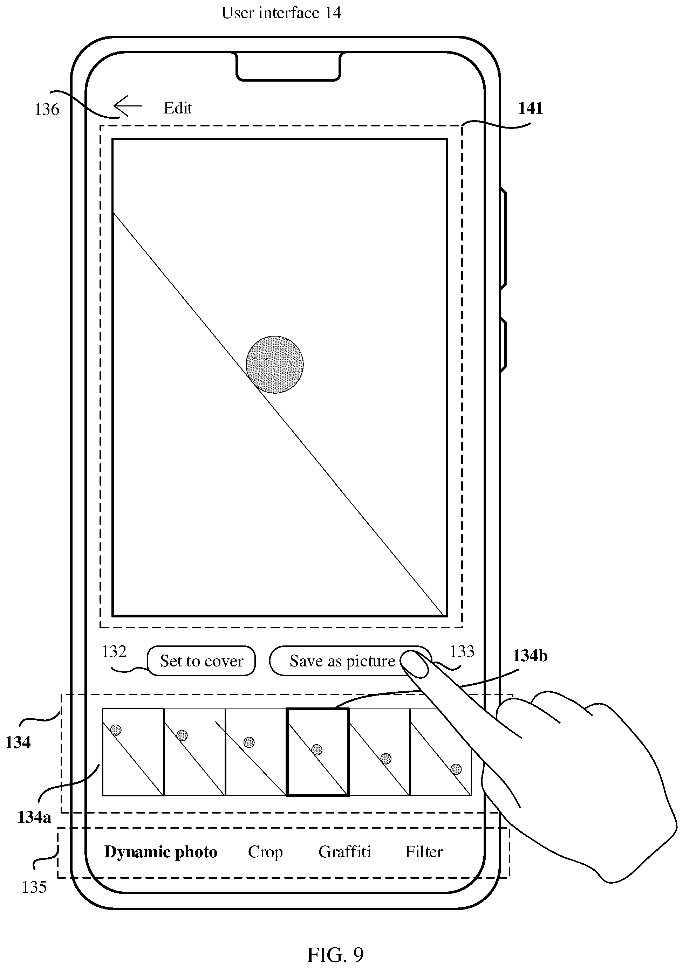

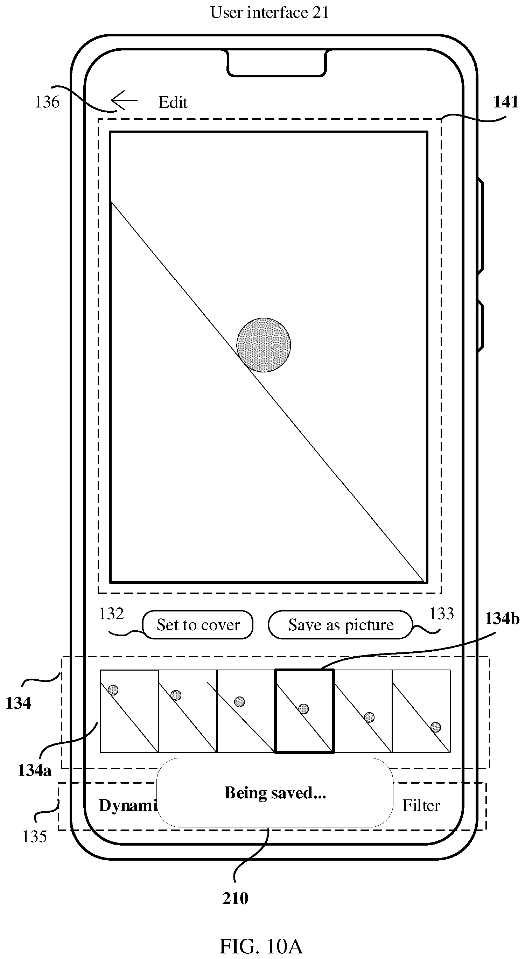

Assuming that an interface shown by the electronic device after the editing function is enabled is shown in FIG. 9, the following is described by using the user interface 14 shown in FIG. 9 as an example. An image selected in the slider bar 134 in the user interface 14 is the thumbnail 134b corresponding to a first still image, and an image displayed in the preview window 141 is the first still image. In an implementation, when detecting a user operation for the save-as control 133 in the user interface 14, the electronic device may save the first still image in response to the user operation, and may display the user interface 21 shown in FIG. 10A in a saving process.

A difference between the user interface 21 and the user interface 14 may lie only in that the prompt box 210 is added to the user interface 21, where the prompt box 210 is configured to prompt that the first still image is being saved currently, for example, content of the prompt box 210 may be "being saved".

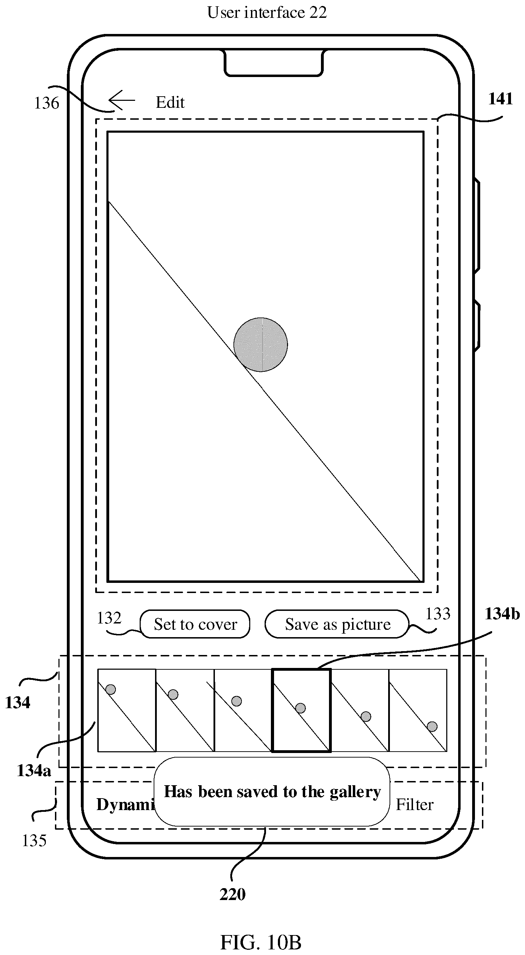

Further, after the first still image is successfully saved, the electronic device may display the user interface 22 shown in FIG. 10B. A difference between the user interface 22 and the user interface 21 may lie only in that the prompt box 210 is updated to the prompt box 220. The prompt box 220 is configured to prompt that the first still image has been successfully saved. For example, content of the prompt box 220 may be "has been saved to the gallery". Except the prompt box, other display content of the user interface 21 and the user interface 22 may be the same as that of the user interface 14. Details are not described herein again.

It should be noted that, the prompt box 210 may also be referred to as a first prompt box. The prompt box 220 may also be referred to as a second prompt box.

In an implementation, after displaying the prompt box 220 for preset duration, the electronic device may not display the prompt box 220, and still displays the user interface 14. In other words, after saving one frame of still image in the dynamic image as a picture by using the save-as control in the editing interface corresponding to the dynamic image, the electronic device may not exit from display of the current interface. Further, the user may continue to reselect a still image in the current interface (that is, the editing interface corresponding to the dynamic image) for saving, editing, or other operations.

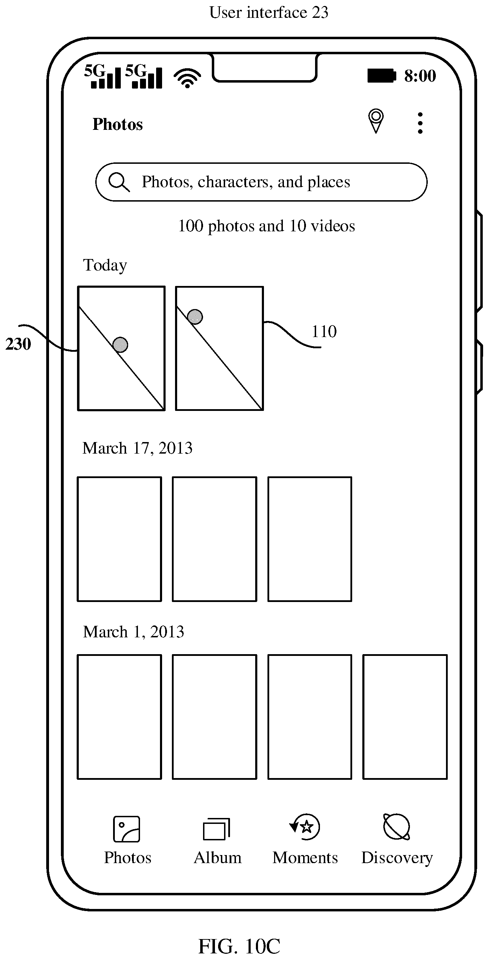

In some embodiments, it is assumed that the user returns to a grid interface of the gallery application after saving the first still image. The grid interface may be the user interface 23 shown in FIG. 10C. The user interface 23 includes the thumbnail 110 of the first dynamic image and the thumbnail 230 of the first still image. Further, the user may tap the thumbnail 230, to view the saved first still image. It should be noted that, a resolution of the saved first still image may be different from a resolution of the first still image displayed in the preview window 141. For a specific saving process, refer to related content in the following description.

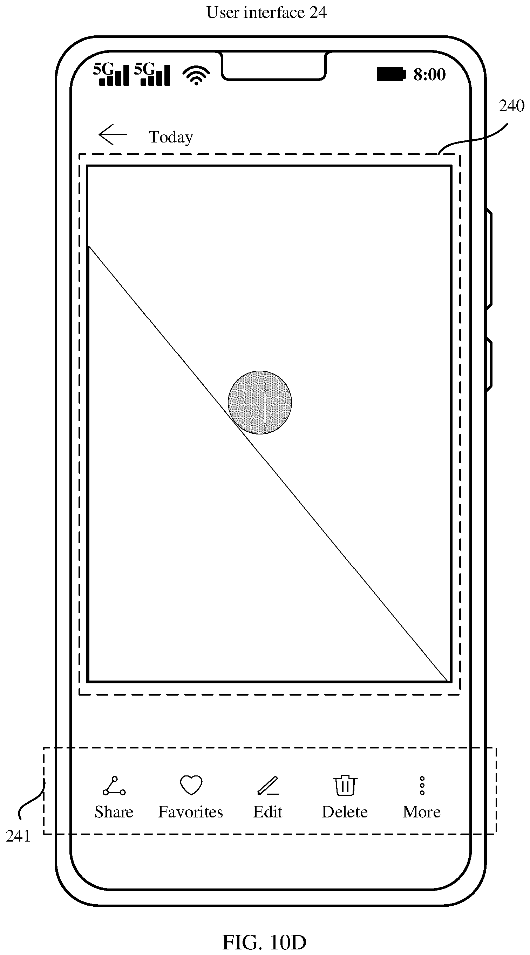

In some other embodiments of this application, when detecting a user operation for the save-as control 133 in the user interface 14, the electronic device saves a still image in a selected state in response to the user operation, may not display the user interface 21 shown in FIG. 10A in a saving process, and display the user interface 24 shown in FIG. 10D after successfully saving the still image. The user interface 24 is a full-size image interface corresponding to the still image in the selected state. In embodiments of this application, the full-size image interface (for example, the user interface 24) corresponding to the saved still image may be referred to as a second interface.

The user interface 24 includes the prompt box 240 and a function area 241. The function area 241 includes a plurality of function controls. The prompt box 240 is configured to display the saved still image in the selected state. FIG. 10D shows that the function controls include an editing control, a favorite control, a sharing control, a delete control, and a more control by using an example. The editing control is configured to edit the image displayed in the prompt box 240. The favorite control is configured to set the image displayed in the prompt box 240 to a favorite state. The sharing control is configured to share the image displayed in the prompt box 240. The delete control is configured to delete the image displayed in the prompt box 240. The more control is configured to display another function that can act on the image displayed in the prompt box 240.

It should be noted that, display content of the image displayed in the prompt box 240 is the same as that of the image displayed in the preview window 141, but resolutions may be different. The resolution of the image displayed in the preview window 141 may be less than that of the image displayed in the prompt box 240.

In embodiments of this application, the still image that is in the first dynamic image and that is displayed on the preview interface corresponding to the first dynamic image (for example, the cover image that is of the first dynamic image and that is displayed in the preview window 121 in the user interface 12 shown in FIG. 1B) may be referred to as the first still image; the still image displayed when the first editing interface is in an initial state (for example, the cover image that is of the first dynamic image and that is displayed in the preview window 131 in the user interface 13 shown in FIG. 1C) is referred to as a second still image; and the image displayed after the first editing interface is updated (for example, the still image that corresponds to the thumbnail 134b in the selected state and that is displayed in the preview window 141 in the user interface 14 shown in FIG. 9) is referred to as a third still image.

An image processing method provided in an embodiment of this application is described below based on the user interface displayed on the electronic device.

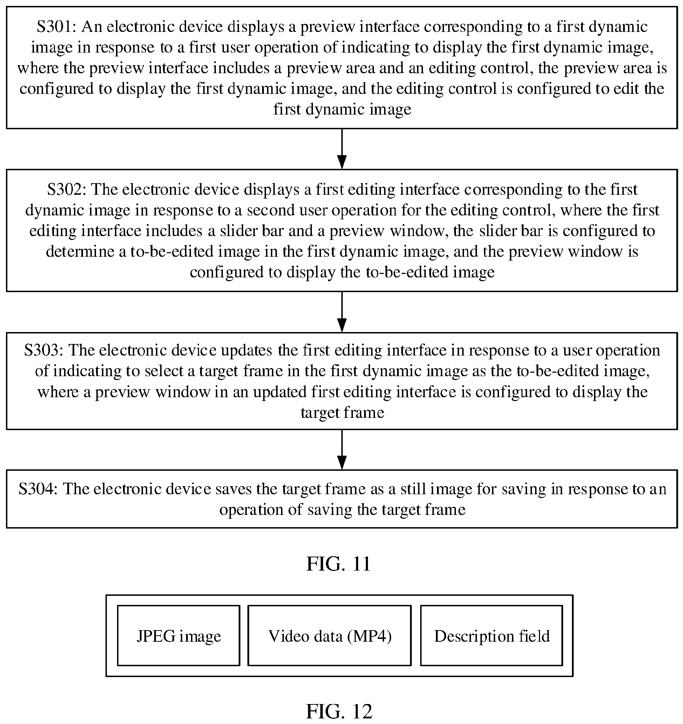

FIG. 11 shows an image processing method according to an embodiment of this application. The method includes some or all of the following steps.

**Step S301: An electronic device displays a preview interface corresponding to a first dynamic image in response to a first user operation of indicating to display the first dynamic image, where the preview interface includes a preview area and an editing control, the preview area is configured to display the first dynamic image, and the editing control is configured to edit the first dynamic image.**

In some embodiments, the electronic device may display an application interface (for example, the user interface 11 shown in FIG. 1A) of a gallery application. The application interface includes a thumbnail (for example, the thumbnail 110 in the user interface 11) of the first dynamic image. When detecting a user operation for the thumbnail, the electronic device displays the preview interface (for example, the user interface 12 shown in FIG. 1B) corresponding to the first dynamic image in response to the user operation. The preview interface includes a preview area (for example, the preview window 121 in the user interface 12) and an editing control (for example, the editing control 122 in the user interface 12). The preview area is configured to display the first dynamic image. The editing control is configured to edit the first dynamic image.

The first dynamic image may be a still image, a dynamic image, a video, or the like.

FIG. 12 is a diagram of a structure of a file format of a dynamic image according to an embodiment of this application. As shown in FIG. 12, the file format of the dynamic image may include three fields. The first field is a JPEG image, and the JPEG field is a cover image of the dynamic image. The second field is video data obtained after mixing is completed, for example, an mp4 file. The third field is a description field (TAG) of the dynamic image. The third field may include three subfields. The first subfield is a version number (version). For example, a current version is a second version, and the version number may be v2. The second subfield includes a start time (start) and duration (duration). To be specific, the second subfield is used to record a playback start time and duration during gallery preview. The start time (start) is a time point in a video at which the first frame is played during gallery preview. The third subfield is used to record a file length of the video data. The file length of the video data may also be referred to as a video byte stream length.

The file length of the video data is used to determine position information of the video in a file. The position information may include a start position and an end position. A video offset is a sum of a length of the second field (that is, the file length of the video data) and a length of the third field. The start position of the video in the file may be determined based on the video offset. The end position of the video in the file may be determined based on the video offset and the video byte stream length.

**Step S302: The electronic device displays a first editing interface corresponding to the first dynamic image in response to a second user operation for the editing control, where the first editing interface includes a slider bar and a preview window, the slider bar is configured to determine a to-be-edited image in the first dynamic image, and the preview window is configured to display the to-be-edited image.**

The first editing interface is configured to process the first dynamic image. The processing includes updating a cover image of the first dynamic image, editing any frame of still image in the first dynamic image, or the like.

In some embodiments, when detecting the second user operation, the electronic device displays the first editing interface in an initial state. The to-be-edited image in the first editing interface in the initial state may be a frame in the first dynamic image, may be the cover image, or may be a preset frame. For example, the preview window in the first editing interface in the initial state displays the cover image of the first dynamic image, and the cover image is also in the slider bar of the first editing interface in the initial state.

Optionally, the editing interface corresponding to the first dynamic image may further include at least one editing option and another control. The at least one editing option includes a first editing option. The first editing option is configured to perform first editing on an image in a selected state. The first editing may be graffitiing, cropping, filtering, watermarking, and the like.

For example, for the editing interface corresponding to the first dynamic image, refer to the user interface 13 shown in FIG. 1C and the user interface 14 shown in FIG. 9. The user interface 13 is the first editing interface in the initial state. The user interface 14 is the first editing interface after the user reselects the still image in the first dynamic image. For the preview window, refer to related descriptions of the preview window 131. For the slider bar, refer to related descriptions of the slider bar 134. For the at least one editing option, refer to related descriptions of the option bar 135.

In some embodiments, when detecting the second user operation performed on the editing control, the electronic device determines whether an image on a current interface is a dynamic image in response to the user operation, and when determining that the image is the dynamic image, initializes an editing interface corresponding to the dynamic image. It may be understood that, editing interfaces corresponding to the dynamic image and the still image may be different.

In an implementation, a process in which the electronic device initializes the first editing interface corresponding to the first dynamic image may specifically include initializing an interface animation, initializing the slider bar, and initializing a buffer, where the buffer is configured to store data in a process of editing the first dynamic image.

For example, initializing the interface animation by the electronic device may include: (1) executing a cover image moving animation, where the cover image moving animation is an interface change that the preview area in the preview interface is switched to the preview window of the editing interface, an initial position is the preview area in the preview interface, and an end position is the preview window of the editing interface; and for example, the animation is that the cover image of the preview window 121 shown in FIG. 1B moves to the preview window 131 shown in FIG. 1C; and (2) performing callback after executing the animation, and loading a video resource of the first dynamic image. In this case, the preview window of the editing interface has two layers of views. The upper layer is the cover image of the first dynamic image, and the lower layer is a surfaceview (surfaceview), where the surfaceview is configured to display the video resource of the first dynamic image. In this embodiment of this application, a selected image in the slider bar may be different from the cover image, for example, resolutions are different. Therefore, the cover image of the first dynamic image is covered at the upper layer herein, to implement visual consistency.

A specific process in which the electronic device obtains the video resource may include: The electronic device may obtain an address of the first dynamic image in a file system, and further obtains the file of the first dynamic image based on the address; obtains a position of the video in the file from a tag (TAG) at an end of the file; further obtains the video based on the position of the video in the file; and performs associated settings on the video and an encoder, where the associated settings are used to subsequently obtain the still image from the first dynamic image. For example, the encoder may be a MediaMetadataRetriever (MediaMetadataRetriever). The electronic device sets the video to the retriever. The retriever provides a uniform interface, configured to retrieve frames and metadata from an input media file. The electronic device performs associated settings on the video and a MediaPlayer (MediaPlayer), that is, sets the video to the MediaPlayer, where the MediaPlayer is combined with the surfaceview to play the video. The electronic device may use a method of invoking seekTo (seekTo) of the MediaPlayer, to locate a position of the selected still image based on a percentage of a number of the selected still image to a total quantity of video frames; bind the surfaceview with the MediaPlayer; and may further control, by invoking MediaPlayer seekTo, an image displayed in the surfaceview.

For example, initializing the slider bar by the electronic device may include: A basic view of the slider bar is initialized, where the basic view is a custom view, that is, the custom view means that a size of the slider bar, a quantity of images in the slider bar, and the like may be preset; further, the cover image is drawn as a background image of each frame of image in the slider bar; a selection box of the slider bar is drawn, the cover image is drawn in the box, or another effect may be achieved, for example, a size of the selection box is greater than a size of an image position at another position; and a plurality of still images are parsed out from the video after the video is obtained. For example, the electronic device may parse a specified frame in the video by using a MediaExtractor (MediaExtractor) and a decoder (MediaCodec), where a quantity of frames is not limited. For example, one frame is obtained from the video every preset time, to obtain 10 frames of still images. Further, the plurality of still images are updated to the background image of the slider bar. For example, after the video of the first dynamic image in the preview window 121 shown in FIG. 1B is obtained, the plurality of still images of the first dynamic image are obtained, and then the plurality of still images are updated to the slider bar 134 in FIG. 1C by using alpha (alpha animation).

Step S303: The electronic device updates the first editing interface in response to a user operation of indicating to select a target frame in the first dynamic image as the to-be-edited image, where a preview window in an updated first editing interface is configured to display the target frame.

In an implementation, when detecting a sliding operation of the user on the slider bar, the electronic device may set the cover image of the dynamic image of the preview window to be invisible, and displays the surfaceview at the lower layer. A sliding position is displayed on the slider bar by using the selection box. When a user operation of sliding to the target frame is detected, the selection box is displayed on the target frame. A percentage of the selection box on the slider bar is calculated. A time point of the target frame in the video is calculated based on the percentage. Further, the seekTo method of the MediaPlayer of the MediaPlayer is invoked to adjust display content of the MediaPlayer to a position corresponding to the time point in the video, so that the surfaceview is updated to the target frame corresponding to the time point, where the surfaceview is configured to carry the display content of the MediaPlayer.

For example, the target frame is a first still image corresponding to the thumbnail 134b shown in FIG. 1C. When detecting a user operation of sliding to the thumbnail 134b of the first still image, the electronic device displays the user interface 14 shown in FIG. 9 in response to the user operation, where the image of the surfaceview in the preview window 141 in the user interface 14 is the target frame, that is, the first still image.

Further, based on the updated first editing image, in some embodiments, the electronic device may update the cover image of the first dynamic image to the target frame in response to a user operation of indicating to set the target frame to the cover image of the first dynamic image, to obtain a second dynamic image. For example, when detecting a user operation for the set-to-cover control 132 in the user interface 14 shown in FIG. 9, the electronic device may set the to-be-edited image displayed in the preview window 141 in the interface to the cover image of the first dynamic image, to obtain the second dynamic image.

**Step S304: The electronic device saves the target frame as a still image for saving in response to an operation of saving the target frame.**

In an embodiment, the user may select the target frame as the to-be-edited image by using the slider bar, and then save the target frame as a still image for saving. Correspondingly, the electronic device may save the target frame as a still image for saving in response to an operation of saving the target frame.

For example, assuming that the first still image shown in FIG. 1C is the target frame, when detecting the user operation of sliding to the thumbnail 134b corresponding to the first still image, the electronic device may determine the first still image as the to-be-edited image in response to the user operation, and the displayed interface may be the user interface 14 shown in FIG. 9. Then, the electronic device may save the first still image in response to a user operation for the save-as control 133 in the user interface 14.

In an implementation, the electronic device may pop up the loading box on the updated first editing interface, where the loading box indicates that the target frame is being saved. Optionally, the electronic device may set to skip responding to any user operation in the process of displaying the loading box. To be specific, the user cannot perform another operation. In a process of displaying the loading box, the electronic device may save the target frame.

For example, a process in which the electronic device saves the target frame may specifically include: (1) first, obtaining the position percentage of the target frame in the current interface (for example, the updated first editing interface) on the slider bar; obtaining the video duration of the video corresponding to the first dynamic image by using the MediaMetadataRetriever, and further calculating the progress of the target frame in the video based on the foregoing position percentage; and obtaining the bitmap corresponding to the progress from the video by using the search method (.getScaledFrameAtTime) of the MediaMetadataRetriever, where the bitmap may be scaled to an image with a resolution the same as that of the cover image of the first dynamic image, to obtain a target frame with a high resolution; (2) obtaining the original exchangeable image file (exchangeable image file, Exif) of the first dynamic image; and modifying the image update time in the original Exif to the current time, to obtain the target Exif corresponding to the target frame; (3) determining the absolute path of the target frame, for example, setting a parent path of the first dynamic image to a parent path of saving as a picture, and setting the current time to a name of the target frame, to obtain the absolute path of the target frame; (4) creating a file of the target frame based on the absolute path, and opening the file; writing the target Exif into the file, compressing the target frame with the high resolution in a jpeg form, and writing a compressed image into the file; and closing the file; (5) obtaining the database information (ContentValues) of the first dynamic data, updating time and date in the ContentValues to the current time, and updating the file path in the ContentValues to the absolute path, to obtain ContentValues of the target frame with the high resolution; (6) inserting the ContentValues of the target frame with the high resolution into the database, which may specifically include inserting the basic information such as the storage path, the creation time, the update time, and the file size of the target frame with the high resolution into the MediaProvider database and inserting the foregoing basic information and information such as the special file type of the target frame with the high resolution into the MediaLibrary database; and (7) triggering to display the preview interface corresponding to the target frame with the high resolution and data refreshing of the grid interface (for example, the user interface 11 shown in FIG. 1A) in the gallery.

In some other embodiments of this application, after performing the forgoing step S303, the electronic device may set the target frame to the cover image or perform first editing on the target frame.

In an implementation, when detecting the user operation of setting the target frame to the cover image, the electronic device may pop up a loading box on the user interface, where the loading box indicates that the image is being set to the cover image currently. Optionally, the electronic device may set to skip responding to any user operation in the process of displaying the loading box. To be specific, the user cannot perform another operation. In a process of displaying the loading box, the electronic device may set the target frame to the cover image of the first dynamic image.

For example, the execution process may specifically include: (1) first, obtaining a position percentage of the thumbnail of the target frame in the current interface (for example, the updated first editing interface) on the slider bar; obtaining video duration of the video corresponding to the first dynamic image by using the MediaMetadataRetriever, and further calculating a progress of the target frame in the video based on the foregoing position percentage; and obtaining a bitmap (Bitmap) corresponding to the progress from the video by using a search method (.getScaledFrameAtTime) of the MediaMetadataRetriever, and scaling the bitmap to a resolution the same as that of the cover image of the first dynamic image, to obtain a target cover image corresponding to the second dynamic image; (2) obtaining the file corresponding to the first dynamic image based on a path of the first dynamic image, which may be specifically obtaining data of the video in the first dynamic image and TAG data at an end of the file; (3) obtaining an original exchangeable image file (exchangeable image file, Exif) of the first dynamic image; and modifying an image update time in the original Exif to a current time, to obtain a target Exif corresponding to the second dynamic image; (4) obtaining original database information (ContentValues) of the first dynamic image; (5) deleting data related to the first dynamic image from a database based on the file path, which may specifically include deleting the data related to the first dynamic image from MediaLibrary (MediaLibrary) data, deleting the data related to the first dynamic image from the database (MediaProvider), and deleting the file corresponding to the first dynamic image; (6) creating a file of the second dynamic image, which may specifically include creating the file based on an absolute path of the first dynamic image; opening the file; writing the target Exif into the file (that is, writing into the file); compressing the target cover image in a jpeg form and writing it into the file; adding the data of the video in the first dynamic image and the TAG data at the end of the file corresponding to the first dynamic image to an end of the file; closing the file; updating cover image number data at the end of the picture file; updating the ContentValues, where the ContentValues may include attributes such as time and date, and whether adding-to-favorites is performed; inserting data related to the second dynamic image into the database, for example, inserting basic information such as a storage path, a creation time, an update time, and a file size of the second dynamic image into the MediaProvider database and inserting the foregoing basic information and information such as a special file type of the second dynamic image into the MediaLibrary database, where the special file type includes a dynamic image, high dynamic range imaging (High Dynamic Range Imaging, HDR), and the like; (7) triggering to display a preview interface corresponding to the second dynamic image and data refreshing of a grid interface (for example, the user interface 11 shown in FIG. 1A) in the gallery; and (8) re-initializing the MediaMetadataRetriever, the MediaPlayer, and the surfaceview because the file of the first dynamic image is deleted.

The Exif of the image may include a camera brand, a mobile phone model, a flash, a shutter speed, an aperture size, photo-sensitivity, GPS coordinates, and other information. This is not limited in embodiments of this application. The database information of the image may include a storage path, a creation time, an update time, a special file type, a file size, and other information of the image.

In another implementation, in response to a third user operation of indicating to perform first editing on the target frame, the electronic device displays a second editing interface for performing first editing on the target frame, where the second editing interface includes an editing window, and the editing window includes the target frame. Further, in response to an editing operation for the target frame, the electronic device may display the edited target frame in the editing window, and may further save the edited target frame in response to a fourth user operation of indicating to save the edited target frame.

The first editing may be editing operations such as graffitiing, cropping, filtering, and watermarking. The second editing interface includes function controls corresponding to the first editing, for example, a function control corresponding to graffitiing and a function control corresponding to filtering. The editing window is configured to display an editing process in which the user performs first editing on the target frame.

For a form and a software structure and a hardware structure of the electronic device that executes the (II) saving part, refer to the electronic device in the foregoing (I) editing part, and details are not described herein again.

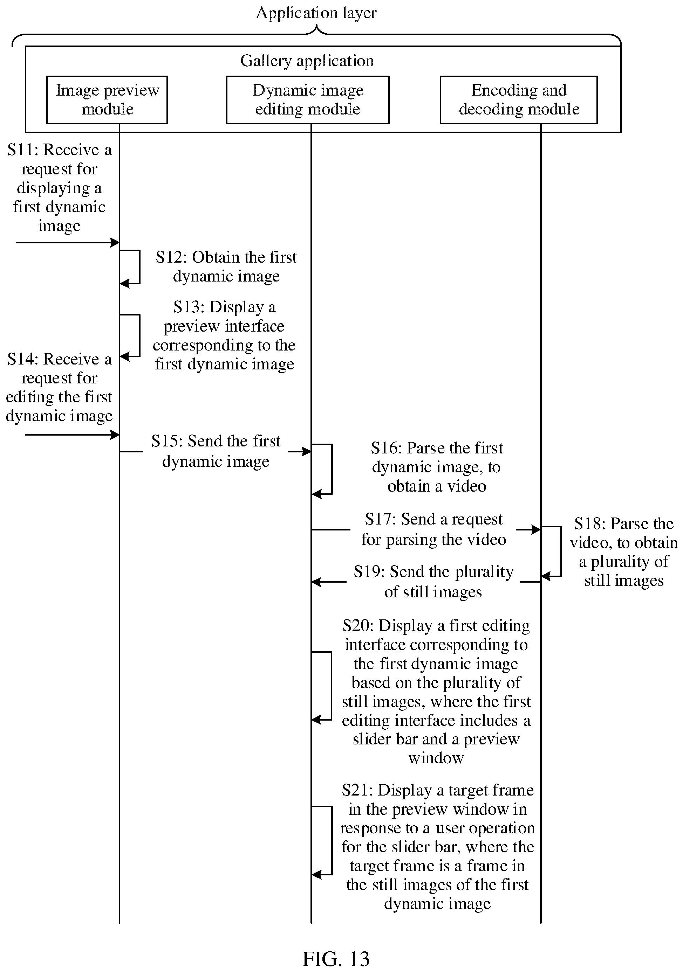

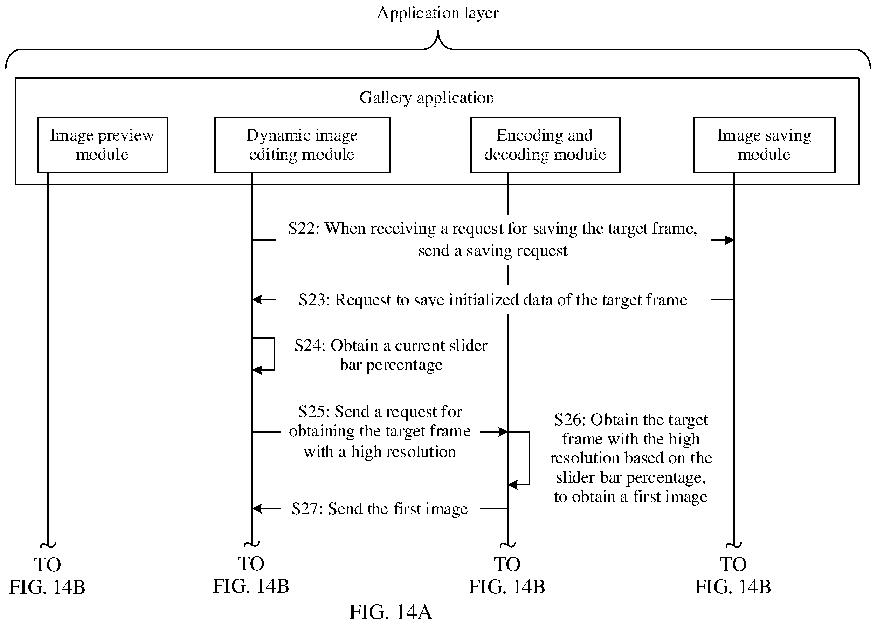

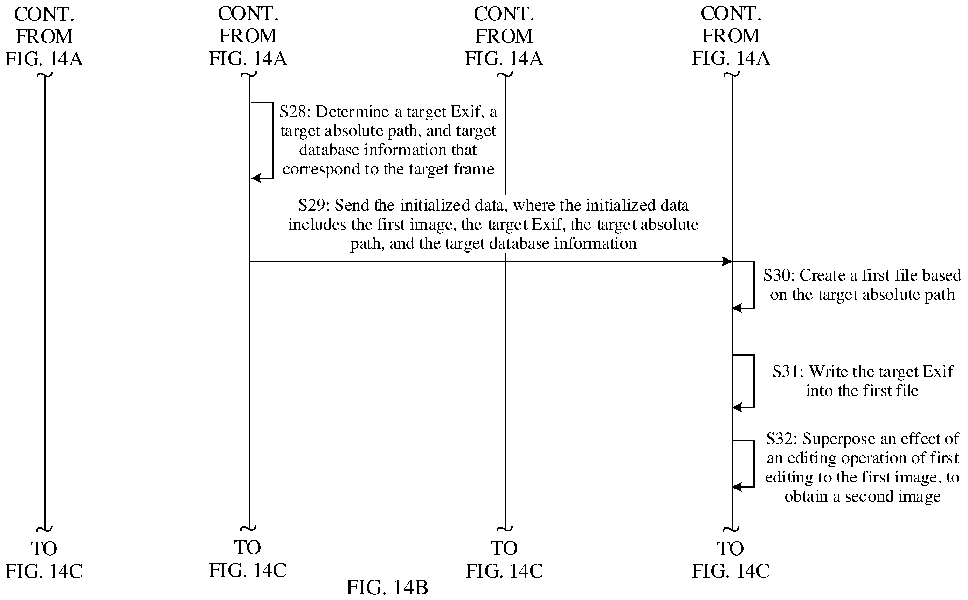

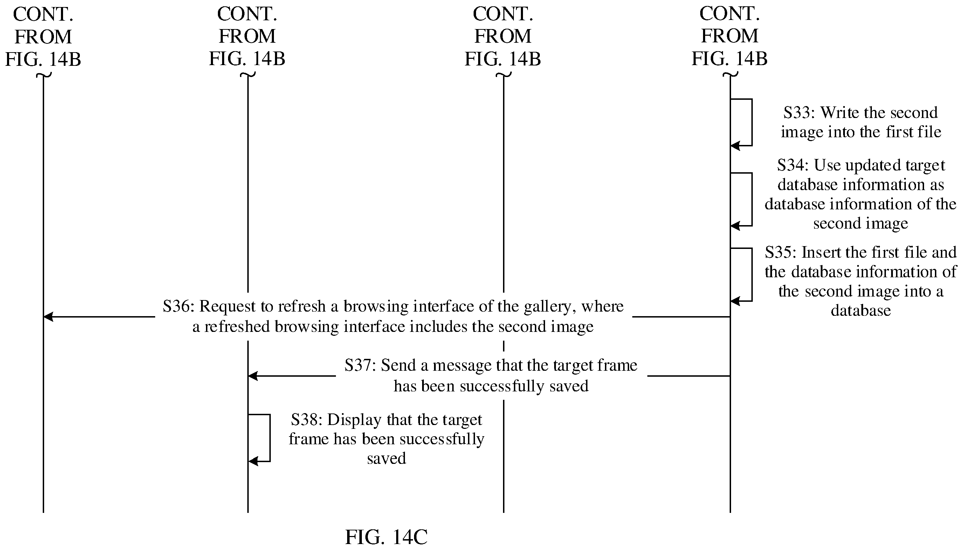

**Based on the software architecture and hardware architecture of the electronic device, the following respectively describes, deep into the architectures with reference to** **FIG. 13** **and** **FIG. 14A****,** **FIG. 14B****, and** **FIG. 14C****, image processing methods according to embodiments of this application.**

FIG. 13 shows an image processing method for editing a still image in a dynamic image by an electronic device according to an embodiment of this application. The method includes some or all of the following steps.

S11: An image preview module receives a request for displaying a first dynamic image.

In some embodiments, a user may trigger the electronic device to start a gallery application, and further trigger the electronic device to display an image of the gallery application. The image of the gallery application may include a dynamic image, a still image, a video, and the like. Assuming that the user triggers to display the first dynamic image, as shown in FIG. 1A, the user may tap the thumbnail 110 of the first dynamic image displayed in the user interface 11, and correspondingly, the image preview module of the electronic device may receive the request for displaying the first dynamic image.

It may be understood that, the user may alternatively trigger, in a manner such as voice or gesture, to display the first dynamic image. A specific manner in which the user triggers the electronic device to display the first dynamic image is not limited in this application.

S12: The image preview module obtains the first dynamic image.

In some embodiments, after receiving the request for displaying the first dynamic image, the image preview module obtains display data of the first dynamic image from a media library. For example, a file format of the first dynamic image obtained by the image preview module may be shown in FIG. 13. Further, the image preview module obtains, from the first dynamic image based on a third field of the first dynamic image, a first field (that is, a cover image corresponding to the first dynamic image) and a second field (that is, a video corresponding to the first dynamic image), where display data of the first dynamic image may be the first field and the second field in the first dynamic image.

S13: The image preview module displays a preview interface corresponding to the first dynamic image.

In some embodiments, after obtaining the display data of the first dynamic image, the gallery preview module displays the preview interface corresponding to the first dynamic image based on the display data. The preview interface includes a preview area, where the preview area is used to display the first dynamic image. The preview interface corresponding to the first dynamic image may further include another control. For specific content of the preview interface, refer to the foregoing related descriptions. As shown in FIG. 1A, the user may tap the thumbnail 110 of the first dynamic image displayed in the user interface 11. Correspondingly, after obtaining the first dynamic image, the image preview module of the electronic device may display the user interface 12 shown in FIG. 1B. The preview window 121 in the user interface 12 may display the cover image of the first dynamic image, and when the user long presses the preview window 121, the video of the first dynamic image is played.

S14: The image preview module receives a request for editing the first dynamic image.

For example, the preview interface corresponding to the first dynamic image includes an editing control, where the editing control is configured to edit the first dynamic image. The user taps the editing control. Correspondingly, the preview module of the electronic device may receive the request for editing the first dynamic image.

For example, the preview interface corresponding to the first dynamic image is shown in FIG. 1B. The user may tap the editing control 122 displayed in the user interface 12 shown in FIG. 1B. Correspondingly, the image preview module of the electronic device receives the request for editing the first dynamic image.

S15: The image preview module may send a display request to a dynamic image editing module, where the display request is used to request to display a first editing interface corresponding to the first dynamic image, and the request includes the first dynamic image.

The request may further include database information of the first dynamic image. The database information includes attributes (information such as a storage path, a file size, a creation time, and an update time) of a picture file. The database information of the first dynamic image is used to browse, view, and edit the first dynamic image.

In some embodiments, when receiving a user operation of indicating to display an image, the image preview module may determine whether an image that the user requests to edit is a dynamic image. When the image that the user requests to edit is the dynamic image, the request for displaying the first editing interface corresponding to the image is sent to the dynamic image editing module. When the image that the user requests to edit is not the dynamic image, data of the image is obtained, and the preview interface of the image is displayed based on the obtained data.

S16: The dynamic image editing module parses the first dynamic image to obtain the video.

In an implementation, the file format of the first dynamic image may be shown in FIG. 12. The dynamic image editing module starts to read the first dynamic image from an end. In other words, the dynamic image editing module may first parse an end tag of the third field of the first dynamic image, to obtain a video byte stream length; add the video byte stream length and a length of the third field to obtain a video offset; further, determine a start position of the video in the first dynamic image based on the video offset, and determine an end position of the video in the first dynamic image based on the length of the third field; and parse in the first dynamic image based on the start position and the end position, to obtain the video.

S17: The dynamic image editing module sends a request for parsing the video to an encoding and decoding module.

S18: The encoding and decoding module parses the video, to obtain a plurality of still images.

For example, the encoding and decoding module extracts the plurality of still images from the video based on a preset interval. A quantity of extracted images is not limited herein.

S19: The encoding and decoding module sends the plurality of still images to the dynamic image editing module.

S20: The dynamic image editing module displays the first editing interface corresponding to the first dynamic image based on the plurality of still images, where the first editing interface includes a slider bar and a preview window.

The slider bar is configured to display thumbnails corresponding to the plurality of still images. The slider bar in the first editing interface may display thumbnails corresponding to some or all still images in the plurality of still images.

In an implementation, the dynamic image editing module initializes the slider bar and the preview window of the first editing interface based on the video, where the first editing interface is in an initial state. The slider bar is configured to display a thumbnail of a still image corresponding to the first dynamic image (a thumbnail in a selected state at present may be a thumbnail corresponding to the cover image of the first dynamic image). The preview window is configured to display a still image corresponding to the thumbnail in the selected state in the slider bar 134 (the current preview window may display the cover image of the first dynamic image). For a specific process of initialization, refer to related descriptions in S302, and details are not described herein again.

For example, the first editing interface may be the user interface 13 shown in FIG. 1C. The user interface 13 includes the slider bar 134 and the preview window 131. The slider bar 134 is configured to display the thumbnail of the still image corresponding to the first dynamic image. The thumbnail in the selected state in the slider bar 134 is the thumbnail corresponding to the cover image of the first dynamic image. The preview window is configured to display the cover image of the first dynamic image.

S21: The dynamic image editing module displays a target frame in the preview window in response to a user operation for the slider bar, where the target frame is a frame in the still images of the first dynamic image.

In an implementation, the dynamic image editing module displays the target frame in the preview window in response to the user operation for the slider bar, and updates an image in a selected state in the slider bar from the cover image to the target frame.

For example, as shown in FIG. 1C, the user may select the thumbnail 134b of the first still image from the slider bar 134 of the user interface 13, and the first still image is the target frame. Correspondingly, the electronic device may display the user interface 14 shown in FIG. 9. The thumbnail of the target frame (that is, the thumbnail 134b of the first still image) in the slider bar 134 in the user interface 14 is in a selected state, and the target frame is displayed in the preview window 141.

Further, after selecting the target frame from the still images of the dynamic image, the electronic device may save the target frame. FIG. 14A, FIG. 14B, and FIG. 14C show an image processing method in which an electronic device saves a target frame according to an embodiment of this application. The method includes some or all of the following steps.

S22: When receiving a request for saving the target frame, the dynamic image editing module sends a saving request to an image saving module.

In an implementation, when the electronic device detects a user operation performed on the save-as control 133 in the first editing interface (for example, the user interface 14 shown in FIG. 9), correspondingly, the dynamic image editing module of the electronic device may receive the request for saving the target frame.

S23: The dynamic image editing module requests the dynamic image module to save initialized data of the target frame.

S24: The dynamic image editing module obtains a current slider bar percentage. The current slider bar percentage is a position percentage of the thumbnail of the target frame in the slider bar.

S25: The dynamic image editing module sends a request for obtaining the target frame with a high resolution to a video decoding module.

In this embodiment of this application, the electronic device may save an image with a high resolution, so that the electronic device can display the image with the high resolution when the user views the saved image, thereby improving user experience.

S26: The video decoding module obtains the target frame with the high resolution based on the slider bar percentage, to obtain a first image.

For example, the video decoding module calculates a timestamp of the target frame based on the slider bar percentage, and further extracts a bitmap corresponding to the timestamp from the video of the first dynamic image based on the timestamp, thereby obtaining the first image.

S27: The video decoding module sends the first image to the dynamic image editing module.

S28: The dynamic image editing module determines a target Exif, a target absolute path, and target database information that correspond to the target frame.

For example, the dynamic image editing module may obtain an original Exif of the first dynamic image, and modify an image update time in the original Exif as a current time, to obtain the target Exif; obtain a path of the first dynamic image, and modify a name of the path as current time and date, to obtain the target absolute path; and obtain database information of the first dynamic image, to obtain the target database information.

S29: The dynamic image editing module sends the initialized data to the image saving module, where the initialized data includes the first image, the target Exif, the target absolute path, and the target database information.

S30: The image saving module creates a first file based on the target absolute path.

For example, the image saving module may create the first file based on the target absolute path.

S31: The image saving module writes the target Exif into the first file.

For example, the image saving module opens the first file, and writes the target Exif into the first file.

S32: The image saving module superposes an effect of an editing operation of first editing to the first image, to obtain a second image.

S33: The image saving module writes the second image into the first file.

For example, the image saving module may compress the second image in a jpeg form, and further write a compressed second image into the first file, and closes the file after writing the compressed second image into the file.

S34: The image saving module uses updated target database information as database information of the second image.

In an implementation, the image saving module may update some fields in the database information of the first dynamic image, and uses the updated database information as the database information of the second image, where some updated fields may include time, a hash value, a file size, a special file type, whether adding-to-favorites is performed, and the like. For example, the image saving module may update the time to the current time, update the file size to the file size of the second image, modify the special file type as none, and update favorites as none.

S35: The image saving module inserts the first file and the database information of the second image into a database.

S36: The image saving module requests the image preview module to refresh a browsing interface of the gallery, where a refreshed browsing interface includes the second image.

For example, assuming that the browsing interface of the gallery of the electronic device is the user interface 11 shown in FIG. 1A before the electronic device saves the target frame, where the user interface 11 includes the thumbnail 110 of the first dynamic image, after the electronic device saves the target frame, the browsing interface of the gallery of the electronic device may be the user interface 23 shown in FIG. 10C, and in comparison with the user interface 11, the thumbnail 230 of the target frame is added to the user interface 23.

S37: The image saving module sends, to the dynamic image editing module, a message that the target frame has been successfully saved.

S38: The dynamic image editing module displays that the target frame has been successfully saved.

For example, the dynamic image editing module may display a prompt box on the current interface, where the prompt box indicates that the target frame has been successfully saved.

For example, the electronic device displays the user interface 14 shown in FIG. 9. When detecting a user operation for the save-as control 133, the electronic device may save the selected still image in response to the user operation, and display the user interface 21 shown in FIG. 10A in a saving process. The user interface 21 includes the prompt box 210. The prompt box 210 is configured to prompt that the selected still image is being saved currently. For example, content of the prompt box 210 may be "being saved". After the still image is successfully saved, the user interface 22 shown in FIG. 10B is displayed. The user interface 22 may include the prompt box 220. The prompt box 220 is configured to prompt that the selected still image has been successfully saved. For example, content of the prompt box 220 may be "has been saved to the gallery".

Further, in some embodiments, when the dynamic image editing module receives a request for exiting from the first editing interface, the image preview module displays the preview interface corresponding to the first dynamic image.

The term "user interface (user interface, UI)" in the specification, the claims, and the accompanying drawings of this application is a medium interface for interaction and information exchange between an application or an operating system and a user, and implements conversion between an internal form of information and a form of the information acceptable to the user. A user interface of an application program is source code written in a specific computer language such as java or extensible markup language (extensible markup language, XML). The interface source code is parsed and rendered on a terminal device, and finally presented as user-recognizable content, for example, a control such as a picture, a text, or a button. A control (control), also referred to as a widget (widget), is a basic element of a user interface. Typical controls include a toolbar (toolbar), a menu bar (menu bar), a text box (text box), a button (button), a scrollbar (scrollbar), a picture, and a text. Attributes and content of controls in an interface are defined by tags or nodes. For example, in XML, controls included in an interface are defined by nodes such as <Textview>, <ImgView>, and <VideoView>. A node corresponds to a control or an attribute in the interface. The node is presented as content visible to a user after being parsed and rendered. In addition, interfaces of many applications, for example, a hybrid application (hybrid application), usually include a webpage. A webpage, also referred to as a page, may be understood as a special control embedded in an application interface. The webpage is source code written in specific computer languages such as a hyper text markup language (hyper text markup language, HTML), a cascading style sheet (cascading style sheets, CSS), and a javascript (JavaScript, JS). The source code of the webpage may be loaded and displayed by a browser or a webpage display component with similar functions to the browser as content that can be recognized by the user. Specific content included in the webpage is also defined by tags or nodes in the source code of the webpage. For example, HTML defines elements and attributes of the webpage through <p>, <img>, <video>, and <canvas>.

The user interface is usually represented in a form of a graphical user interface (graphic user interface, GUI), which is a user interface displayed in a graphical manner and related to computer operations. The graphical user interface may be an interface element such as an icon, a window, or a control that is displayed on a display of an electronic device. The control may include visible interface elements such as an icon, a button, a menu, a tab, a text box, a dialog box, a status bar, a navigation bar, and a Widget.

It should be understood that the steps of the foregoing method embodiments provided in this application may be implemented by using a hardware integrated logic circuit in the processor or implemented by using instructions in a software form. The steps of the method disclosed with reference to embodiments of this application may be directly implemented by a hardware processor, or may be implemented by a combination of hardware and software modules in a processor.

This application further provides an electronic device, and the electronic device may include a memory and a processor. The memory may be configured to store a computer program, and the processor may be configured to invoke the computer program in the memory to enable the electronic device to perform the method in any one of the foregoing embodiments.

This application further provides a chip system. The chip system includes at least one processor configured to implement the functions involved in the method performed by the electronic device in any one of the foregoing embodiments. In a possible design, the chip system further includes a memory. The memory is configured to store program instructions and data. The memory is located inside the processor or outside the processor. The chip system may be formed by chips, or may include chips and other discrete components.

Optionally, the chip system may include one or more processors. The processor may be implemented by using hardware or by using software. When implemented by using hardware, the processor may be a logic circuit, an integrated circuit, or the like. When implemented by using software, the processor may be a general-purpose processor, and is implemented by reading software code stored in the memory.

Optionally, the chip system may also include one or more memories. The memory may be integrated with the processor, or may be separated from the processor. This is not limited in embodiments of this application. For example, the memory may be a non-transitory memory such as a read-only memory ROM, and the memory and the processor may be integrated on a same chip, or may be disposed on different chips respectively. A type of the memory and an arrangement manner of the memory and the processor are not limited in embodiments of this application.

For example, the chip system may be a field programmable gate array (field programmable gate array, FPGA), an application specific integrated circuit (application specific integrated circuit, ASIC), a system on chip (system on chip, SoC), a central processing unit (central processor unit, CPU), a network processor (network processor, NP), a digital signal processor (digital signal processor, DSP), a micro controller unit (micro controller unit, MCU), a programmable logic device (programmable logic device, PLD), or another integrated chip.

This application further provides a computer program product, and the computer program product includes a computer program (which may also be referred to as code or an instruction). When the computer program is run, a computer is enabled to perform the method performed by the electronic device in any one of the foregoing embodiments.

This application further provides a computer-readable storage medium. The computer-readable storage medium stores a computer program (which may also be referred to as code or an instruction). When the computer program is run, a computer is enabled to perform the method performed by the electronic device in any one of the foregoing embodiments.

Implementations of this application may be randomly combined, to achieve different technical effects.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedures or functions according to this application are all or partially generated. The computer may be a general-purpose computer, a dedicated computer, a computer network, or another programmable apparatus. The computer instructions may be stored in a computer-readable storage medium, or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The available medium may be a magnetic medium (for example, a floppy disk, a hard disk, or a magnetic tape), an optical medium (for example, a DVD), a semiconductor medium (for example, a solid state disk Solid State Disk), or the like.

A person of ordinary skill in the art may understand that all or some of the procedures of the methods in embodiments may be implemented by a computer program instructing relevant hardware. The program may be stored in a computer-readable storage medium. When the program is executed, the procedures in the method embodiments may be performed. The foregoing storage medium includes any medium that can store program code, such as a ROM, a random access memory RAM, a magnetic disk, or an optical disc.

In conclusion, the foregoing is merely embodiments of the technical solutions of the present invention, but is not intended to limit the protection scope of the present invention. Any modification, equivalent replacement, or improvement made according to the disclosure of the present invention shall fall within the protection scope of the present invention.

## Claims

1. An image processing method, applied to an electronic device, wherein the method comprises:
displaying a first interface, wherein the first interface comprises a first still image and a first control, the first still image corresponds to a first dynamic image, and the first dynamic image comprises a plurality of frames of still images;
displaying a first editing interface in response to a user operation performed on the first control, wherein the first editing interface comprises a first thumbnail, a second thumbnail, and a second still image, the first thumbnail and the second thumbnail are thumbnails corresponding to two frames of still images in the first dynamic image, the first thumbnail is in a selected state, the first thumbnail corresponds to the second still image, the first still image and the second still image correspond to a same frame of still image in the first dynamic image, and the first editing interface further comprises a second control;
displaying a third still image corresponding to the second thumbnail at a position of the second still image in response to a user operation performed on the second thumbnail, wherein the second thumbnail is in a selected state;
displaying a second editing interface in response to a user operation performed on the second control, wherein the second editing interface comprises a fourth still image and a third control, and the third still image and the fourth still image correspond to a same frame of still image in the first dynamic image;
displaying an editing effect of the fourth still image in response to a user operation performed on the fourth still image; and
displaying the first editing interface in response to a user operation performed on the third control, wherein the first editing interface displays the editing effect of the fourth still image at a position of the third still image, and displays the editing effect of the fourth still image at a position of the second thumbnail.

2. The method according to claim 1, wherein the first editing interface comprises a first save control, and the method further comprises:
generating a target image based on the editing effect of the fourth still image in response to a user operation performed on the first save control; and
saving the target image.

3. The method according to claim 2, wherein the method further comprises:
displaying a first prompt box on the first editing interface in response to the user operation performed on the first save control, wherein the first prompt box indicates that an image is being saved;
displaying a second prompt box on the first editing interface after the target image is saved, wherein the second prompt box indicates that the image has been successfully saved; and
canceling displaying the second prompt box.

4. The method according to any one of claims 1 to 3, wherein the second editing interface further comprises a second save control, and the method further comprises:
generating the target image based on the editing effect of the fourth still image when a user operation performed on the second save control is received;
saving the target image; and
displaying a second interface after the target image is saved, wherein the second interface comprises the target image.

5. The method according to any one of claims 2 to 4, wherein the generating the target image comprises:
determining, based on the second thumbnail, position information of the fourth still image in a video corresponding to the first dynamic image;
obtaining a first image from the video based on the position information;
increasing a resolution of the first image, to obtain a second image; and
processing the second image based on the editing effect of the fourth still image, to obtain the target image.

6. The method according to any one of claims 1 to 5, wherein the displaying a second editing interface comprises:
taking a screenshot of a position area in which the third still image is displayed, to obtain the fourth still image.

7. The method according to any one of claims 1 to 6, wherein the first editing interface comprises a resetting control, and the method further comprises:
displaying the first editing interface in response to a user operation performed on the resetting control, wherein the first editing interface comprises the first thumbnail, the second thumbnail, and the second still image, and the first thumbnail is in the selected state.

8. The method according to any one of claims 1 to 7, wherein the first still image is a cover image of the first dynamic image.

9. The method according to any one of claims 2 to 8, wherein saving the target image by the electronic device comprises:
obtaining a storage path that corresponds to the first dynamic image, an initial exchangeable image file Exif, and initial database information, wherein the initial Exif comprises a parameter of the first dynamic image, and the parameter comprises a time;
obtaining, by the electronic device based on the storage path corresponding to the first dynamic image and a current time, a storage path corresponding to the target image;
creating a target file corresponding to the target image based on the storage path corresponding to the target image;
modifying the time in the initial Exif as the current time, to obtain target Exif;
writing the target Exif and the target image into the target file;
updating the initial database information with file information of the target image, to obtain target database information, wherein the file information of the target image comprises the storage path corresponding to the target image and a creation time of the target file; and
storing the target database information into a database.

10. The method according to any one of claims 1 to 9, wherein the displaying a first editing interface comprises:
obtaining the video corresponding to the first dynamic image; and
decoding the video by using an encoding and decoding module, to obtain the plurality of frames of still images.

11. The method according to any one of claims 1 to 10, wherein the second control is any one of a cropping control, a graffiti control, a watermark control, a filter control, a text control, a mosaic control, a blurring control, a photo frame control, and a color retention control.

12. An image processing method, applied to an electronic device, wherein the method comprises:
displaying a first interface, wherein the first interface comprises a first still image and a first control, the first still image corresponds to a first dynamic image, and the first dynamic image comprises a plurality of frames of still images;
displaying a first editing interface in response to a user operation performed on the first control, wherein the first editing interface comprises a first thumbnail, a second thumbnail, and a second still image, the first thumbnail and the second thumbnail are thumbnails corresponding to two frames of still images in the first dynamic image, the first thumbnail is in a selected state, the first thumbnail corresponds to the second still image, the first still image and the second still image correspond to a same frame of still image in the first dynamic image, and the first editing interface further comprises a second control;
displaying a third still image corresponding to the second thumbnail at a position of the second still image in response to a user operation performed on the second thumbnail, wherein the second thumbnail is in a selected state; and
saving the third still image in response to a user operation performed on the second control.

13. The method according to claim 12, wherein the method further comprises:
displaying a first prompt box on the first editing interface in response to the user operation performed on the second control, wherein the first prompt box indicates that an image is being saved;
displaying a second prompt box on the first editing interface after the third still image is saved, wherein the second prompt box indicates that the image has been successfully saved; and
canceling displaying the second prompt box.

14. The method according to claim 12, wherein the method further comprises:
displaying a second interface after the third still image is saved, wherein the second interface comprises the third still image.

15. The method according to any one of claims 12 to 14, wherein the saving the third still image comprises:
determining, based on the second thumbnail, position information of the third still image in a video corresponding to the first dynamic image;
obtaining a first image from the video based on the position information;
increasing a resolution of the first image, to obtain a second image; and
saving the second image.

16. The method according to any one of claims 12 to 15, wherein the first editing interface further comprises a third control, and the method further comprises:
displaying a second editing interface in response to a user operation performed on the third control, wherein the second editing interface comprises a fourth still image and a fourth control, and the third still image and the fourth still image correspond to a same frame of still image in the first dynamic image;
displaying an editing effect of the fourth still image in response to a user operation performed on the fourth still image; and
displaying the first editing interface in response to a user operation performed on the fourth control, wherein the first editing interface displays an editing effect of the fourth still image at a position of the third still image, and displays the editing effect of the fourth still image at a position of the second thumbnail.

17. The method according to claim 16, wherein the second editing interface further comprises a fifth control, and the method further comprises:
generating the target image based on the editing effect of the fourth still image when a user operation performed on the fifth control is received;
saving the target image; and
displaying a third interface after the target image is saved, wherein the third interface comprises the target image.

18. The method according to claim 16 or 17, wherein the first editing interface comprises a resetting control, and the method further comprises:
displaying the first editing interface in response to a user operation performed on the resetting control, wherein the first editing interface comprises the first thumbnail, the second thumbnail, and the second still image, and the first thumbnail is in the selected state.

19. The method according to any one of claims 12 to 18, wherein the first still image is a cover image of the first dynamic image.

20. The method according to any one of claims 13 to 19, wherein saving the third still image by the electronic device comprises:
obtaining a storage path that corresponds to the first dynamic image, an initial exchangeable image file Exif, and initial database information, wherein the initial Exif comprises a parameter of the first dynamic image, and the parameter comprises a time;
obtaining, by the electronic device based on the storage path corresponding to the first dynamic image and a current time, a storage path corresponding to the third still image;
creating a target file corresponding to the third still image based on the storage path corresponding to the third still image;
modifying the time in the initial Exif as the current time, to obtain target Exif;
writing the target Exif and the third still image into the target file;
updating the initial database information with file information of the third still image, to obtain target database information, wherein the file information of the third still image comprises the storage path corresponding to the third still image and a creation time of the target file; and
storing the target database information into a database.

21. The method according to any one of claims 12 to 20, wherein the displaying a first editing interface comprises:
obtaining the video corresponding to the first dynamic image; and
decoding the video by using an encoding and decoding module, to obtain the plurality of frames of still images.

22. The method according to any one of claims 14 to 21, wherein the second interface is a full-size image interface that corresponds to the third still image and that is in a gallery application of the electronic device, wherein the second interface comprises at least one of an editing control, a favorite control, a sharing control, and a delete control.

23. An electronic device, comprising one or more processors and one or more memories, wherein the one or more memories are coupled to the one or more processors, the one or more memories are configured to store computer program code, the computer program code comprises computer instructions, and when the one or more processors execute the computer instructions, the method according to any one of claims 1 to 22 is enabled to be performed.

24. A chip system, wherein the chip system is used in an electronic device, the chip system comprises one or more processors, and the processor is configured to invoke computer instructions, to enable the method according to any one of claims 1 to 22 to be performed.

25. A computer-readable storage medium, comprising instructions, wherein when the instructions are run on an electronic device, the method according to any one of claims 1 to 22 is enabled to be performed.
